(19) Europäisches Patentamt
European Patent Office
Office européen des brevets

(11) **EP 1 461 772 B1**

(12) **EUROPEAN PATENT SPECIFICATION**

(45) Date of publication and mention of the grant of the patent:
**07.11.2012 Bulletin 2012/45**

(51) Int Cl.:
*G06T 9/00* *(2006.01)* *H04N 7/26* *(2006.01)*
*H04N 1/41* *(2006.01)*

(21) Application number: **02804306.5**

(22) Date of filing: **03.12.2002**

(86) International application number:
**PCT/GB2002/005454**

(87) International publication number:
**WO 2003/049037 (12.06.2003 Gazette 2003/24)**

(54) **METHOD AND APPARATUS FOR COMPRESSING DATA AND DECOMPRESSING COMPRESSED DATA**

VERFAHREN UND VORRICHTUNG ZUM KOMPRIMIEREN VON DATEN UND ZUM DEKOMPRIMIEREN KOMPRIMIERTER DATEN

PROCEDE ET APPAREIL PERMETTANT DE COMPRESSER DES DONNEES ET DE DECOMPRESSER DES DONNEES COMPRESSEES

(84) Designated Contracting States:
**DE FR**

(30) Priority: **03.12.2001 GB 0128888**
**18.06.2002 GB 0213998**

(43) Date of publication of application:
**29.09.2004 Bulletin 2004/40**

(60) Divisional application:
**12164175.7 / 2 479 723**

(73) Proprietor: **Imagination Technologies Limited**
**Kings Langley,**
**Hertfordshire WD4 8LZ (GB)**

(72) Inventor: **Fenney, Simon**
**St. Albans,**
**Herts AL2 3JY (GB)**

(74) Representative: **Richardson, Julie Kate**
**Reddie & Grose LLP**
**16 Theobalds Road**
**London**
**WC1X 8PL (GB)**

(56) References cited:
**EP-A- 0 617 554       US-A- 5 956 431**

• HANG H-M, HASKELL B: "Interpolative Vector Quantization of Color Images" IEEE TRANSACTIONS ON COMMUNICATIONS, vol. 36, no. 4, April 1988 (1988-04), pages 465-470, XP002236995
• YOUNG-SU KWON ET AL: "Pyramid texture compression and decompression using interpolative vector quantization" PROCEEDINGS 2000 INTERNATIONAL CONFERENCE ON IMAGE PROCESSING (CAT. NO.00CH37101), PROCEEDINGS OF 7TH IEEE INTERNATIONAL CONFERENCE ON IMAGE PROCESSING, VANCOUVER, BC, CANADA, 10-13 SEPT. 2000, pages 191-194 vol.2, XP010529956 2000, Piscataway, NJ, USA, IEEE, USA ISBN: 0-7803-6297-7
• CAMPBELL G ET AL: "TWO BIT/PIXEL FULL COLOR ENCODING" COMPUTER GRAPHICS PROCEEDINGS. ANNUAL CONFERENCE SERIES. SIGGRAPH, XX, XX, vol. 20, no. 4, 1 August 1986 (1986-08-01), pages 215-223, XP000563518 cited in the application
• RAMASUBRAMANIAN D ET AL: "A hybrid wavelet compression scheme for material textures" IEEE COMPUT. SOC. USA, PROC. 2ND INT. WORKSHOP ON DIGITAL AND COMPUTATIONAL VIDEO, 9 February 2001 (2001-02-09), pages 187-193, XP010547459 USA

- **DELP E J ET AL: "IMAGE COMPRESSION USING BLOCK TRUNCATION CODING", IEEE TRANSACTIONS ON COMMUNICATIONS, IEEE SERVICE CENTER, PISCATAWAY, NJ. USA, vol. COM-27, no. 9, 1 September 1979 (1979-09-01), pages 1335-1342, XP000915141, ISSN: 0090-6778, DOI: DOI:10.1109/TCOM.1979.1094560**

## Description

This invention relates to a method of, and apparatus for, compressing data and a method of, and apparatus for, decompressing data. The invention may be used in a computer graphics systems, and in particular, in a computer graphics system that generates three-dimensional images using texturing by applying texture image data to 3D surfaces.

Background To The Invention

In 3D computer graphics, surface detail on objects is commonly added through the use of image-based textures, as first introduced in 1975 by Ed Catmull ("Computer Display of Curved Surfaces", Proc. IEEE Comp. Graphics, Pattern Recognition and Data Structures. May 1975). For example, an image of a sheet of wood may be applied to a set of polygons representing a 3D model of a chair to give the 3D rendering of that object the appearance that it is made of timber.

In a complex 3D scene, many such 'textures' may be required which can cause two related problems. The first is simply the cost of storing these textures in memory. Consumer 3D systems, in particular, only have a relatively small amount of memory available for the storage of textures and this can rapidly become filled. This is especially aggravated by the use of so called 'true colour' textures which typically have 32 bits per texture pixel - eight bits for each of the Red, Green, Blue, and Alpha (translucency) components.

The second, and often more critical problem, is that of bandwidth. During the rendering of the 3D scene, a considerable amount of texture data must be accessed. In a real-time system, this can soon become a significant performance bottleneck.

One approach to alleviate both of these problems is to use a form of image compression. Numerous such systems, for example the JPEG standard, are in use in image processing and transmission, but very few are suitable for real-time 3D computer graphics. The main problem with the majority of these compression schemes is that they do not permit direct 'random access' of pixel data within the compressed format, and fast arbitrary access is a requirement of the texturing process. This random access is often not possible because the per-pixel storage rate varies throughout the image, and so the schemes that have been proposed and/or implemented to compress texture data are usually restricted to fixed rate encoding.

Another requirement of any system that compresses texture is that the decompression process must be fast and inexpensive to implement in hardware. This usually eliminates 'transform coding' systems such as the discrete cosine transform, DCT, used in JPEG.

The most frequently used system is one based on colour palettes, which was originally used as a method of reducing the memory and bandwidth costs of video framebuffers. (see: "A Random-Access Video Frame Buffer", Kajiya, Sutherland, Cheadle, Proceedings IEEE Comp. Graphics, Pattern Recognition, & Data Structures. May 1975). In such schemes, each pixel is represented by a small number of bits, typically 4 or 8, which stores an index into a table of colours, or palette, with 16 or 256 entries respectively. Numerous methods for reducing an original "true colour" image to this palettised format exist, with perhaps the best known being P. Heckbert's "Color Image Quantisation for Frame Buffer Display" (Computer Graphics Vol. 16, No. 3, July 1982, 297-307).

There are several drawbacks with the palette system. The first is that there is a level of indirection involved in decoding each texture pixel, also called a texel. A texel's index must first be read from memory and then the corresponding entry in the colour table must be accessed. Bringing the colour table 'on chip' or using dedicated RAM can 'hide' the time delay of the double read, but this too incurs additional penalties other than just the gate cost. For example, each time a new texture is accessed, the dedicated palette table must be reloaded. Alternatively a global palette could be used for all textures, but this would severely reduce the quality of the compressed images. Finally, the storage and bandwidth savings are not outstanding for 8 bits per pixel (or bpp) textures, and the quality of 4 bpp is generally poor.

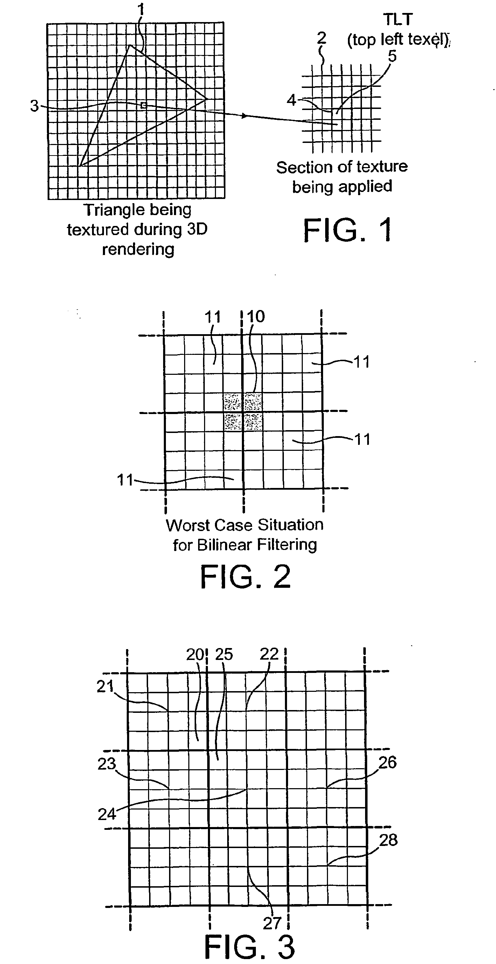

Further cost complications arise due to texture filtering. Usually when a texture is applied to a surface, a weighted filter is applied to several sampled texels to avoid the texture appearing "blocky". Bilinear filtering is one commonly used method which also forms the basis for some more sophisticated techniques. For example, figure 1 illustrates a triangular surface '1' to which a texture '2' is being applied using bilinear filtering. The location of each screen pixel covered by the triangle, such as '3', is mapped back into the coordinate system of the texture, and the four texels surrounding this position are identified, '4'. A weighted average of these four texels are then used to compute the applied texture value.

In a real-time system it is preferable for the texel fetching system to be able to supply all the texels of this 2x2 block in parallel in order to allow the texturing process to operate at maximum speed. In a texturing system incorporating colour palette textures, these steps would involve fetching the indices for all four texels and then finding each texels' corresponding colour in the table. It can be appreciated that, unless it is multi-ported, the palette/colour table RAM could become a bottleneck. This represents an additional cost. (The problem of addressing multiple indices in parallel is identical to that of using non-compressed textures and so has been 'solved' in various ways in the art and need not be considered here).

Palettised textures are a form of vector quantisation compression, or VQ, and more complex forms have been used in 3D Computer Graphics. Beers et al ("Rendering from Compressed Textures", Computer Graphics, Proc. SIGGRAPH, Aug. 1996, pp373-378) simulated a hardware renderer that used VQ textures. This offered storage costs from around 2bpp down to the equivalent of ½ bpp by replacing each 2x2 or 4x4 block of pixels with a single index into a large look-up table. A simpler VQ system, offering 2, 1, and ½ bpp compressed texture data rates, was implemented in hardware in the SEGA DREAMCAST™ games console. Interestingly, the two higher compression ratios in this system were achieved by combining two levels of vector quantisation.

Although these forms of VQ offer high levels of compression at reasonable quality, they still suffer from needing two memory accesses. Furthermore, the size of the look-up table is much greater than that of the palettised textures and so any internal storage or caching of the look-up table is more expensive. The filtering costs also become greater due to wider data structures.

There are also a number of alternative compression methods based on Block Truncation Coding, or BTC, as presented by Delp and Mitchell ("Image Compression Using Block Truncation Coding", IEEE Trans. Commun. Vol. COM-27, Sept.1979). In BTC, a monochrome image is subdivided into non-overlapping rectangular blocks, say, 4x4 pixels in size, and each block is then processed independently. Two representative values, say of 8 bits each, are chosen per block and each pixel within the block is quantised to either of these two values. The storage cost for each block in the example is therefore 16* 1 bit plus 16 bits for the two representatives, thus giving an overall rate of 2bpp. Because the blocks are independent, this simplifies the compression and decompression algorithms, however this could potentially lead to artefacts across block boundaries.

Cambell et al, ("Two bit/pixel full color encoding". SIGGRAPH '86 Conference Proceedings, Computer Graphics, Vol. 20, No. 4, August 1986, pages 215-223) introduced Color Cell Compression, CCC, which extended BTC to encode colour images at 2bpp. Unfortunately this required an external palette and the example images also show some evidence of colour banding. Despite these shortcomings, Knittel et al ("Hardware for Superior Texture Performance", Proceedings of the 10th Eurographics Workshop on Graphics Hardware, 33-39, 1995) suggested using these image compression schemes in a texturing system.

In US Patent 5,956,431, Iourcha et al also adapt the BTC method to encode colour. In Iourcha's system, often referred to as S3TC or DXTC, each block stores two representative colours, typically at 16 bits each. Each pixel in the block is encoded typically using two bits and so can refer to four different values. Two of these values reference the two representative colours while the other two reference two colours that are derived directly from the two representatives. Usually the two derived colours are linear blends of the main representative colours, although sometimes one of the other values is chosen to indicate a fully transparent pixel. As with BTC, each block is completely independent of every other block.

The quality of the S3TC system is generally higher than that given by CCC and avoids the need for a colour palette, but these advantages are achieved at the price of approximately doubling the storage costs to 4bpp. Furthermore, because this compression method is limited to only four colours per block, certain textures have been known to display banding. Also, as with BTC, there may be some artefacts at block boundaries.

If we consider bilinearly filtering a texture compressed with the S3TC system, we see that although in many cases the 2x2 set of texels required for the weighted filter could be fetched from a single 4x4 pixel block, there exist situations where more blocks are needed. The worst case situation, as shown in figure 2, arises when each pixel of the 2x2 set, '10', belongs to a different 4x4 block, '11'. A real-time system that could texture one bilinearly filtered screen pixel per clock would therefore have to be able to access and decode four blocks in parallel.

Another scheme that mixes a block-based system with a palette-like approach has been presented by Ivanov & Kuzmin. ("Color Distribution - A New Approach to Texture Compression", Eurographics 2000). Here each block stores at least one base colour but a local palette is implied by allowing access to a certain set of the neighbouring blocks' base colours. In an example system, the local palette for a particular block may have access to the base colours from an additional 3 neighbouring blocks - for example the choice might be to use the base colour from the block to right, the one below, and the one to the 'below and right'. Each texel in a block would thus be represented by a two bit index accessing one of the four available base colour choices. This system would need a cache of base colours in order for it to be efficient since it would still be expensive to repeatedly access the neighbouring colours. Note also that the worst-case situation for bilinear filtering with this scheme can involve access to any of nine different blocks -this is shown in Figure 3, where to decode pixel 20, access to one of the base colours of blocks 21, 22, 23, and 24 is required while for pixel 25, access to one of 24, 26, 27, and 28 is needed.

Another texture compression scheme, called FXT1, was published in 1999 by 3dfx Interactive, Inc. This used 8x4 blocks, each of which could be compressed in four different ways. One such block mode was similar to the S3TC (CC_MIXED), while another, (CC_CHROMA) stored a local 4 colour palette which could be indexed directly.

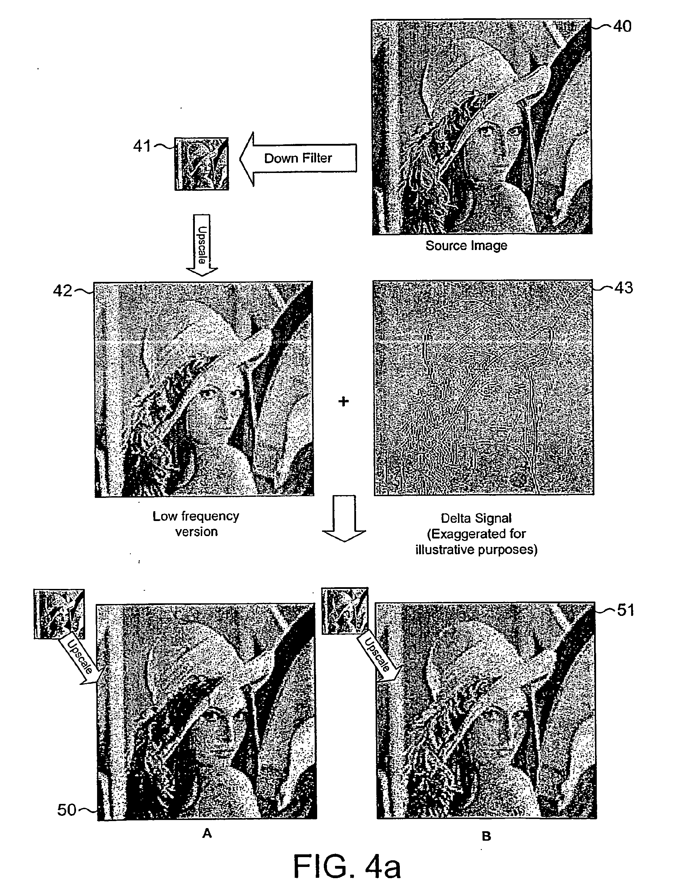

Although not directly applicable to texture compression, multi-resolution image analysis and wavelet techniques (e.g. as described in "Wavelets for Computer Graphics. Theory and Applications", Stollnitz, DeRose, & Salesin. ISBN 1-55860-375-1) has been applied to image compression with some success. This technique makes use of the fact that a low-resolution version of an image, which is subsequently scaled up, is frequently a good approximation of the original image. Figure 4a illustrates this process with a grey-scale image (due to the restrictions of monochromatic printing). The source image, '40', is filtered down by a factor of four in both the x and y dimensions to produce a low-resolution version, '41', that has 16 times less data. In this example a linear wavelet has been applied twice in both the x and y directions and the difference signals discarded This has then been bilinearly scaled up to produce the low frequency image, '42'. The difference between this and the original signal is shown (amplified for illustrative purposes) in '43'.

The differences signal needed to reconstruct the original image from the scaled version often requires very few bits per pixel. In fact frequently a lot of the data can be thrown away to give a lossy compression system. This works well for natural images, but graphics, e.g., line drawings or text, often has a much greater amount of information in the delta signal and so the technique may not produce a good compressionrate for this class of images. (This is analogous to me ringing artefacts frequently seen around text in a JPEG-compressed diagram).

The present invention aims to provide better quality compression per bit of compressed data than that of S3TC. It uses a fixed rate of encoding or compression with a reasonably simple decompression algorithm. Unlike the CCC or VQ systems, the present invention does not require a secondary data structure such as a colour look-up table.

The invention in its various aspects is defined in the independent claims below, to which reference should now be made. Advantageous features are set forth in the appendant claims.

Drawing from work in the related image processing fields of wavelets, it has previously been noted that a down filtered and subsequently up-scaled image can be a reasonable approximation of the original. Just such a signal will be referred to as a low frequency signal. The inventor has appreciated that such signals can be efficiently constructed by sharing data associated with neighbouring groups or blocks of pixels.

The differences between the low frequency signal and the original image can be computed and will be referred to as the difference data or delta signal. Furthermore, the inventor has appreciated that for a great many textures, the delta signal, i.e. the difference between the low frequency signal and the original image, is locally relatively monochromatic. For example the pixels in one local region of the delta image might be predominantly blue-yellow (i.e. complementary colours).

By using the delta signal and the low frequency signal, two new low frequency signals, A and B, may be constructed so that each pixel of the original image can be closely approximated by a per pixel linear blend of the A and B signals. Returning to Figure 4a, image '50' represents the image produced by the low frequency A signal, which in this example is an approximate 'lower' bound on the image, while '51' represents the image produced by the low frequency B signal and gives an approximate 'upper' bound. Note that in this example, both the A and B signals contain at least 16 times less information than the original image. Using A and B two sets of reduced size data, A' and B' respectively, may be generated and it is the sets of reduced size data A' and B' that are stored as the compressed data.

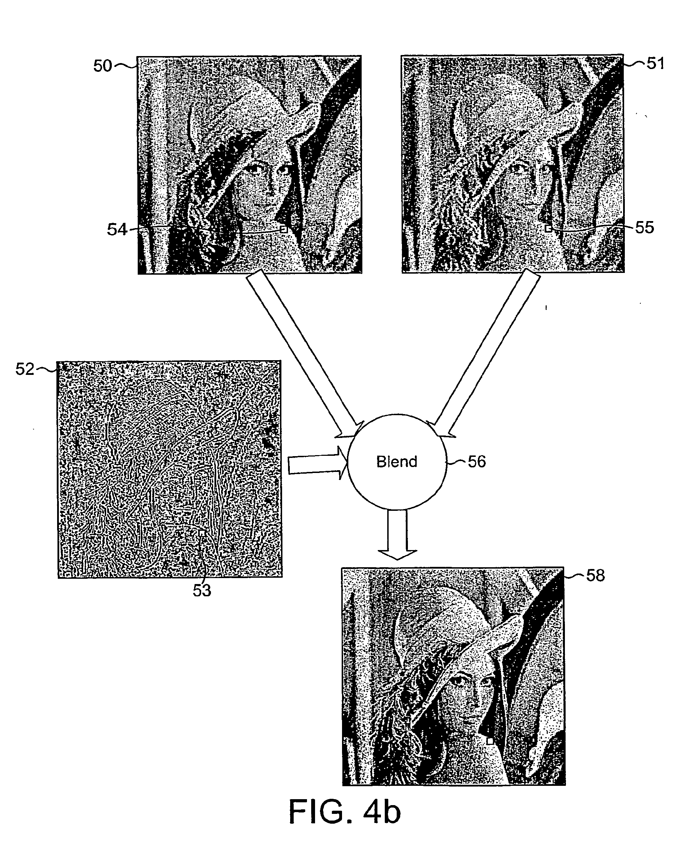

To perform the linear blend, a modulation signal is also required. This is illustrated by image 52 in figure 4b. Each pixel, (y,x, in this image represents a fractional value, $0 \leq \alpha_{y,x} \leq 1$, and is chosen so that $(1-\alpha_{y,x}).A_{y,x}+\alpha_{y,x}.B_{y,x}$ approximately equals the corresponding pixel in the original image.

Decompression of the texture proceeds by identifying the pixel to be decompressed and obtaining its modulation value, '53'. The data required to generate the low frequency A and B signals at that pixel are also obtained and used to produce the corresponding pixels in A, '54', and B, '55'. These are blended, '56', to produce the decompressed pixel, '57' Applying this process to all the pixels decompresses the entire image, '58'.

Note that the A and B signals, prior to up scaling, can be at relatively low resolution. For example, resolutions of four to eight times lower than the original texture will usually produce good quality images. Furthermore, very little per-pixel modulation data, typically one or two bits per pixel, is required. This is partly due to the fact that the human eye tends to mask noise in regions with large changes in luminance (according to Delp and Mitchell).

The present invention maintains the advantages of simple addressing that come from BTC and its variants, yet avoids many of the discontinuity problems that frequently occur at the block boundaries in that scheme. The invention is also optimised to decompress, in parallel, the four pixels required for a bilinear filtering operation.

The A & B signals can be produced by numerous functions, however tensor product surfaces, such as bilinear or bicubic functions, are suggested as a means of up scaling. This choice represents a trade-off of quality versus implementation cost.

The modulation data will typically be stored in an array of 'storage' blocks, with each 'storage' block containing information to produce NxM modulation values, where N and M typically correspond to the scaling factors used for the low frequency signals. The low resolution information needed to reconstruct the A & B signals can either be stored in a separate array, or alternatively one A&B low resolution pair could be kept inside each of the 'storage' blocks. The former system is advantageous if the up-scaling function is one such as bicubic which requires numerous data control points to perform the interpolation. The latter method is useful for simpler up-scaling functions such as bilinear which typically require few data control points.

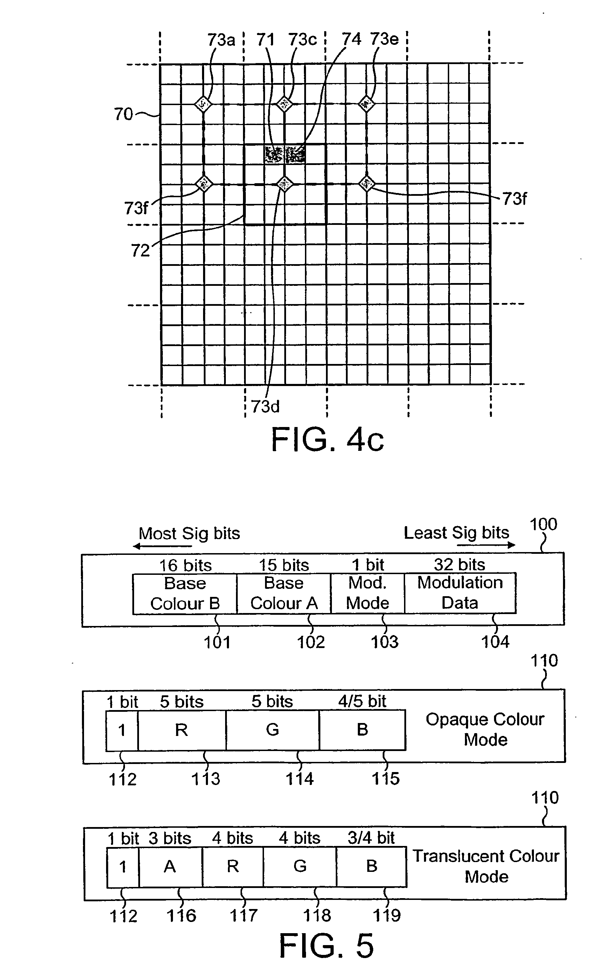

If a system uses the former 'separate data storage' system and also maintains a cache of recently fetched modulation and A&B values, it is beneficial for bandwidth reasons to arrange the behaviour of up-scaling function so that the A & B values needed to decompress a particular section of texels is 'out of phase' with the required block modulation data. That is, as a run of texels is accessed, the cache will generally be alternatively fetching modulation data and then A&B values as this should even out the requests to external memory. This is illustrated in figure 4c. In this example bilinear upscaling of the A & B data has been used. It shows a set of texels, '70', belonging to the image, of which texel '71' is to be decompressed. The 'storage' block containing the modulation value associated with texel '71' contains the modulation values for 4x4 adjacent texels, '72'. Because bilinear has been used, (up to) four pairs of A & B representative values, '73a', '73b', '73c', and '73d' are needed to generate the low frequency A & B signals for texel '71'. The adjacent texel, '74', uses the same set of modulation values, 72, but needs a slightly different set of A&B values, i.e. '73c', '73d', '73e', and '73f'. It is assumed that previous values used for texel '71' will still be residing in a cache. It should be appreciated that if the representative values for A & B were instead aligned on the corners of the '72', that although the average rate of data access would be the same, the peak data rate would have to be higher as both new modulation and A&B values would be fetched simultaneously.A second reason for preferring the out-of-phase arrangement is that it is natural to align blocks of modulation information with integer multiples of the block sizes. If the A&B values are also so aligned, then there is unevenness to the spread of representatives for the edges of the texture in that there is a preference for left and top edges.

The invention could also be extended to use a greater number of signals. For example, a third channel, C, could be introduced along with an additional per pixel modulation value. Barycentric coordinates could then be used to blend the signals.

Expansion of four neighbouring elements in parallel by for example, bilinear expansion or using tensor product surfaces is described. It recursively identifies quadrants and uses simple 90 degree rotations to map each of the four quadrant cases down to a single case. The calculations may be carried out at low precesion and expanded up to full precision.

The invention provides a means of encoding n-dimensional source data arranged in an m-dimensional array. The apparatus requires a means of generating P data signals, R, where P is two or greater, and where each of the signals also consists of n-dimensional data arranged in an m-dimensional array. Each of the R signals have fewer representative data elements than the original source data. Also provided is a means of obtaining or generating modulation information, M. The modulation data is also arranged in an m-dimensional array with the same number of elements as the original source data. Each datum in M consists of (P-1) scalar values. A means of storing the M and R data is provided. A means of interpolating each of the P individual R data signals to a one to one correspondence with that of the original source data and a means of applying M to the interpolated R data is provided. For each datum of the original source image, the corresponding M datum, consisting of (P-1) scalar values is used to interpolate via barycentric coordinates the corresponding P data items of the interpolated R signals. A means is also provided for optimising the stored R and M data such that, for the application of the M data to the interpolated R data, the result is near to the corresponding original datum.

Further adaptations and applications of embodiments of the invention will be described later.

Embodiments of the invention will now be described in more detail in accordance with the accompanying drawings in which:

Figure 1 is a representation of the application of a texture to a surface using bilinear filtering;
Figure 2 illustrates the worst-case situation for bilinear filtering with S3TC;
Figure 3 illustrates the worst-case situation with bilinear filtering of "Color Distribution" texture compression;
Figure 4a shows steps involved in low pass filtering an image and computing the delta signal;
Figure 4b shows the overall texture decompression process of the invention;
Figure 4c is a schematic showing A and/or B values out of phase with the modulation data;
Figure 5 shows the format of the compressed texture data blocks;
Figure 6 shows the layout of modulaticn information in the 4BPP blocks;
Figure 7 illustrates the block data needed to decompress a particular set oftexels;
Figure 8 is a block diagram illustrating the selection and interpretation of modulation information;
Figure 9 illustrates a naïve bilinear upscale;
Figure 10 describes the optimised hardware for parallel bilinear upscale;
Figure 11 is a block diagram of the hardware that modulates the A and B signals;
Figure 12 illustrates the swap modes needed to implement texture repetition modes;
Figure 13 is an overview of the compression process;
Figure 14 is the 'axis image' calculation step of the compression process;
Figure 15 is a block diagram of the steps to compute the initial A and B in the compression process;
Figure 16 is the initial optimisation of the modulation and A and B values in the compression process;
Figure 17 illustrates a typical region optimised by the SVD step with a representation of the input matrix;
Figure 18 shows the block arrangement for the 2BPP format;
Figure 19 shows one of the modulation modes used in the 2BPP format;

Figure 20 shows the other modulation mode of the 2BPP format;

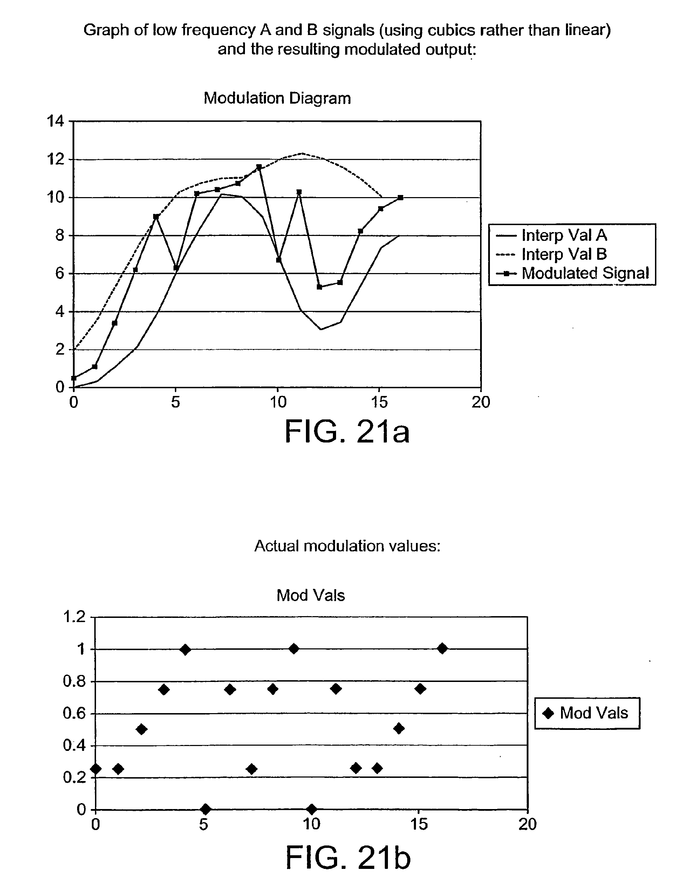

Figure 21a shows the application of a plurality of modulation values to two sets of interpolated low resolution data; and
Figure 21b shows the modulation values used in figure 21a.

## Descriptions of Preferred Embodiments of the Invention

There are two preferred embodiments of the invention: The first stores the texture at the rate of 4 bits per pixel (bpp or BPP) while the second offers the higher compression of 2 bits per pixel albeit at lower image quality. The 4bpp variant will be presented first, beginning with the format of the stored data, followed by the decompression process, and finally by a compression algorithm.

## 4 BPP data format

In this embodiment, the A and B low frequency signals are produced by bilinearly up scaling lower resolution images which are stored at 1/4x1/4 the resolution of the final texture map. Although it is possible to store the A' and B' data and the pixel modulation data separately, in the preferred embodiment they are arranged in blocks with an amalgam of local A' and B' data with the modulation information of the block. Each block in the preferred embodiment requires 64 bits of storage, the format of which is shown in figure 5.

Each block of data, '100', consists of four main fields of information, with these being: a 16 bit field representing the local 'colour B' signal information, '101', a 15 bit 'colour A' field, '102', a single bit modulation mode flag, '103', and 32 bits of modulation data, '104'.

Each of the colour A and colour B fields can be independently interpreted as representing either a fully opaque colour, '110', or one with a variable level of translucency, '111'. A single bit flag, '112', inside each of the 'colour A' and 'colour B' fields determines the mode. In the fully opaque mode the flag is set to "1", while it is set to "0" for the translucent mode.

In the opaque mode, for both colour A and colour B, the red channel, '113', and the green channel, '114' are both encoded by five bits. For the B colour data field, the blue channel, '115', is also represented by five bits, but for space reasons, the field is reduced to four bits for colour A. Being opaque, there is no requirement to explicitly encode data for the alpha channel whicl is assumed to set to the maximum value, which for reasons to be presented later, is a four bit value consisting entirely of 1s.

In the translucent mode, '111', the colour precision is reduced to allow room to store an explicit alpha value, '116', which occupies three bits. For both the A' and B' data signals, the red and green channels, '117' and '118' respectively, use four bits each. For the case of a translucent B' colour, the blue channel, '119' is also stored with four bits of precision, but is reduced to three bits for the A' colour, again for space reasons.

These colour channels can be converted back to the 'standard' 32 bit ARGB colour data signal, with eight bits per channel. A commonly used method in the art involves appending sufficient numbers of the more significant bits of the low precision numbers to generate a full complement of 8 bits. For example, a 5 bit channel value is often converted to the equivalent 8 bit value by making the original 5 bits the 5 most significant bits of the 8 bit value and then copying the 3 most significant bits and using these as the 3 least significant bits of the result. For reasons of hardware economy, the following variation, expressed in "C" code, is used instead:

```
#define R_OFF (0)
#define G_OFF (1)
#define B_OFF (2)
#define A_OFF (3)
void ConvertColour(const int ColourIn[4],
                   const int OpaqueFlag,
                   const int IsColourA,
                        int ColourOut[4])
{
        // Intermediate format (5,5,5,4) format
        // This is important later in the document.
        int R5, G5, B5, A4;
        if(OpaqueFlag==1)
        {
                A4 = 0xF;
                R5 = ColourIn [R_OFF];
                G5 = ColourIn [G_OFF] ;
                if(IsColourA)
```

```
                    {
                            B5 = (ColourIn [B_OFF] « 1) |
                                    (ColourIn [B_OFF] » 4);
                    }
                    else
                    {
                            B5 = ColourIn [B_OFF];
                    }
            }
            else
            {
                    A4 = ColourIn [A_OFF] « 1; //append 0
                    R5 = (ColourIn [R_OFF] « 1) | (ColourIn [R_OFF]
        » 4) ;
                    G5 = (ColourIn [G_OFF] « 1) | (ColourIn[G_OFF]
        » 4) ;
                    if (IsColourA)
                    {
                            //convert 3 to 5 bits
                            B5 = (ColourIn[B_OFF] « 2) |
                                    (ColourIn [B_OFF] » 1);
                    }
                    else
                    {
                            B5 = (ColourIn [B_OFF] « 1) |
                                    (ColourIn [B_OFF] » 4);
                    }
            }
            // convert from 4 and 5 bits to 8 bits
            ColourOut [R_OFF] = (R5 « 3) | (R5 » 2);
            ColourOut [G_OFF] = (G5 « 3) | (G5 » 2);
            ColourOut [B_OFF] (B5 « 3) | (B5 » 2);
            ColourOut [A_OFF] = (A4 « 4 | A4;
    }
```

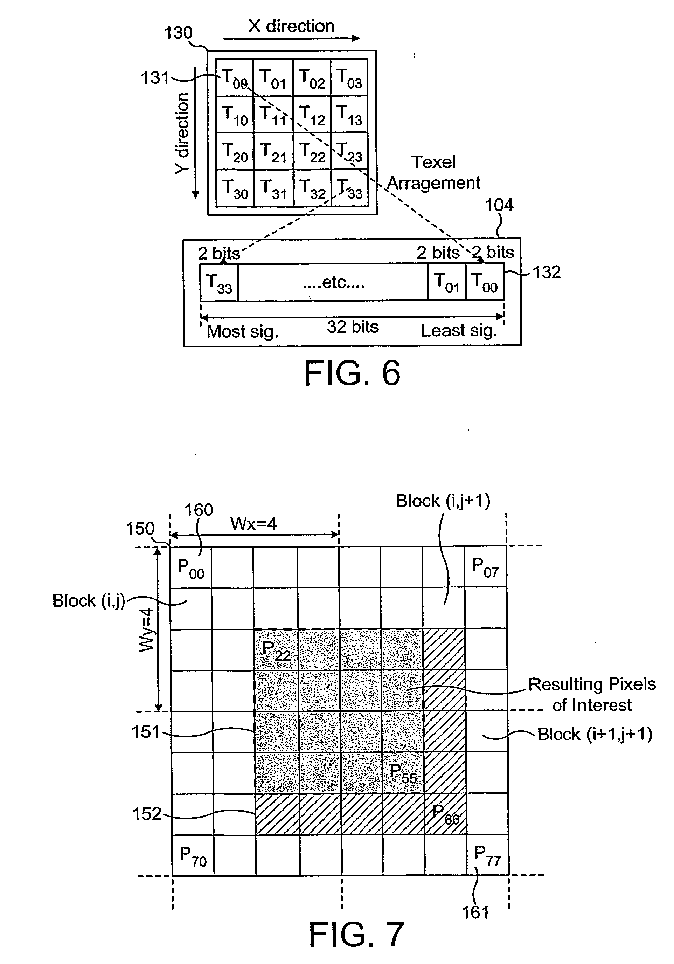

With reference to figure 6, the modulation data, '104', encodes the modulation information for a 4x4 block of pixels, '130'. Each pixel value is encoded using exactly two bits, with the top left pixel value, '131' being stored in the least significant position, '132'. Subsequent pixels are stored in row order, from left to right within each row, in increasing order of bit significance, with the pixel at the bottom right of the block being stored in the most significant two bits.

The modulation mode flag, '103', is used to determine how to interpret the two bit modulation values. If this flag is zero, then the two bit patterns are interpreted as:

Decode Table 0:

| Bit Pattern | Modulation Value |
|---|---|
| 00 | 0/8$^{ths}$ |
| 01 | 3/8$^{ths}$ |
| 10 | 5/8$^{ths}$ |
| 11 | 8/8$^{ths}$ |

The reason for this choice is twofold. Firstly, the distribution of modulation values generally follows the shape of a normal distribution centred on ½, and so it is advantageous to bias the distribution slightly toward the centre. Secondly, the numerators are small and so the blending operations are inexpensive to implement in hardware.

If the flag, '103', is set to 1, then a form of punch-through alpha texturing is enabled for the block of pixels. The modulation values are then interpreted as:

Decode Table 1:

| Bit Pattern | Modulation Value | Special Alpha Action |
|---|---|---|
| 00 | 0/8$^{ths}$ | - |

8

(continued)

| Bit Pattern | Modulation Value | Special Alpha Action |
|---|---|---|
| 01 | 4/8ths | - |
| 10 | 4/8ths | Force Alpha to Zero |
| 11 | 8/8ths | - |

The 00, 01, and 11, codes behave in the same way as the other modulation mode except for the slightly different modulation value for 01. With the 10 code, the red, green, and blue colour component values are computed in the same way but the alpha value of the final pixel is forced to be zero irrespective of the alpha values in the up-scaled A and B low resolution signals.

The 64 bit blocks for an entire texture may be arranged in memory in the standard row order, i.e. all of the blocks of the first row arranged from left to right, followed by the subsequent rows. In the preferred embodiment, however, these blocks are stored in an address bit interleaved order. This technique is described in our US patent 6313846 with regard to pixel addresses but can just as easily be applied to the arrangement of blocks. This arrangement has major implementation efficiency benefits such as reduction of memory page breaks and the simplification of data cache design.

<u>4 BPP decompression method and apparatus</u>

In the preferred embodiment, the invention is optimised for decompressing groups of four pixels arranged for bilinear texture filtering. For the reasons described previously with regard to figure 4c, it is also optimised for the AB signals to be 'out of phase' with the modulation storage. With reference to figure 7, it can be noted that any set of 2x2 texels, needed for a bilinear texture filtering operation, can uniquely determine a particular set of four, 4x4 pixel blocks, '150', also arranged in a 2x2 array. This can be seen by considering the top left texel (or TLT) of the 2x2 arrangement, as shown by '5' in figure 1. This texel uniquely determines a unique 4x4 pixel region in the image, as illustrated by the uniform grey region, '151'. The remaining three texels will then fall somewhere within the union of the grey region, '151', and the cross-hatched region, '152'.

Note that to avoid complications at the boundaries of the texture, the 'blocks' can be assumed to repeat indefinitely. This is a slightly different issue to that of the texture 'wrap modes' that those skilled in the art will be familiar with, and that aspect will be described later.

The block coordinates of the top left block in the group can be determined directly from the coordinates of the TLT. Assuming that texel's coordinates are (y,x), and that the texture has dimensions $Y_{size}$ x $X_{size}$, then the block's coordinates, (i,j), are given by:

$$i = \left\lfloor \frac{(y-2)\bmod Y_{size}}{4} \right\rfloor \qquad j = \left\lfloor \frac{(x-2)\bmod X_{size}}{4} \right\rfloor$$

In the preferred embodiment, the dimensions of the textures are restricted to be powers of two, which makes the above calculations inexpensive to implement in computer hardware as would be appreciated by anyone skilled in the art.

As the other blocks in the group are immediate neighbours, their coordinates can be determined by simple additions, i.e., (i,j+1), (i=1,j), and (i+1,j+1), taking care to 'wrap around' (i.e. assign to zero) any coordinate value that goes past its respective boundary of the texture. In the preferred embodiment, it is assumed that the original source texture is designed to repeat or tile. In such a texture, the left and right edges are 'similar', as are the top and bottom edges. This assumption simplifies the hardware required as, apart from the wrapping of block addresses at the right and bottom of the image, no other special processing is required. In an alternative embodiment, additional signals can be generated to optionally indicate that a boundary (i.e. the left-right, and/or top-bottom) has been crossed. These signals would instruct the bilinear up-scale hardware, to be described, to locally repeat the representative values within their respective blocks.

In decompressing the four requested texels, we can now restrict our consideration to just the four corresponding pixel blocks.

The TLT must now be located relative to the pixels of the block group. Numbering the pixels in the region from the (y=0,x=0) texel at the top left, '160', in row order to the bottom right pixel (7,7), '161', the local position of the TLT can be found by taking the two least significant bits from each of the y and x values of its coordinates and mapping them via the following table.

| Global Coord LSBs | Equivalent Local Coord |
|---|---|
| 00 | 100 (i.e.4) |
| 01 | 101 (5) |
| 10 | 010 (2) |
| 11 | 011 (3) |

This table is mainly for illustrative purposes and this operation, although trivial, i.e. a single bit "not" operation, is not actually needed in the hardware.

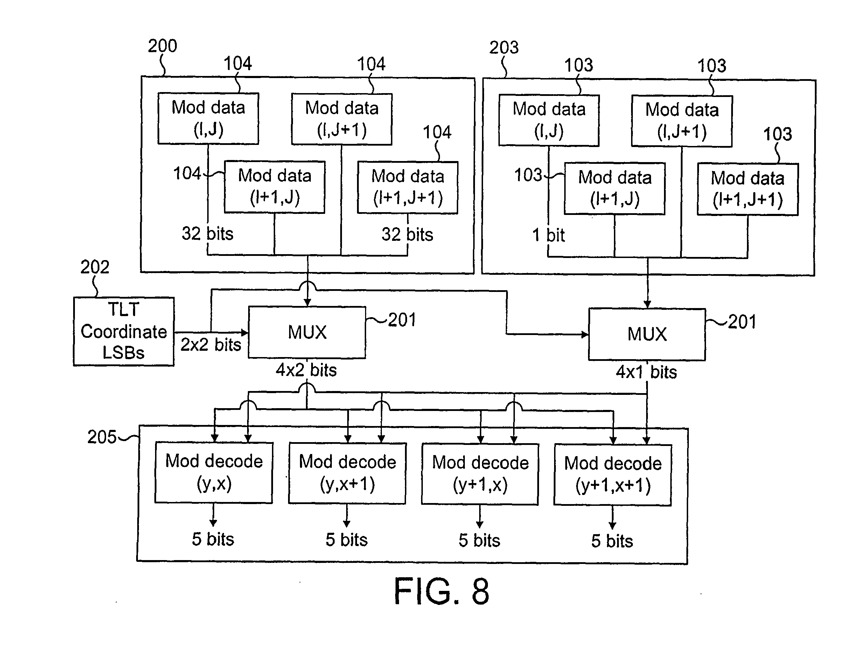

The local pixel coordinate values can then be used to produce the required modulation information. This is shown in figure 8. From the identified four pixel blocks, {(i,j),(i,j+1),(i+1,j),(i+1,j+1)} four corresponding modulation fields, '104', are grouped, '200', and fed into a multiplexer, '201'. In response to the two pairs of least significant bits of the TLT coordinates, '202', the multiplexer outputs the four pairs of bits corresponding to the four bilinear texels' modulation encodings.

It should be appreciated that although each modulation field, '104', stores 32 bits, not all of these need be fed to the multiplexer, '201'. With reference to figure 7, we can see that only four pixels of block (i,j) fall within the region of interest, i.e. the union of regions '151' and '152', and so only eight of these 32 bits need be supplied to the multiplexer.

Similarly, the set '203' of the four modulation mode flags, '103', corresponding to the four blocks are also supplied to a multiplexer unit, '204', which again in response to the TLT coordinates, '202', outputs four single bit flags describing the required modulation modes of the four texels.

Finally, the output of multiplexers '201' and '204' are grouped by texel, and each of the four sets of three bits is supplied to one of four modulation decoding units, '205', corresponding to the four texels, (y,x),(y,x+1),(y+1,x), and (y+1,x+1). Each decoding unit implements the previously described decode tables 0 & 1, and outputs 5 bits. Four of these five bits represent the numerator value from the decode tables, i.e. one of 0, 3, 4, 5, or 8, while the remaining bit indicates if the alpha value of the texel should be forced to zero.

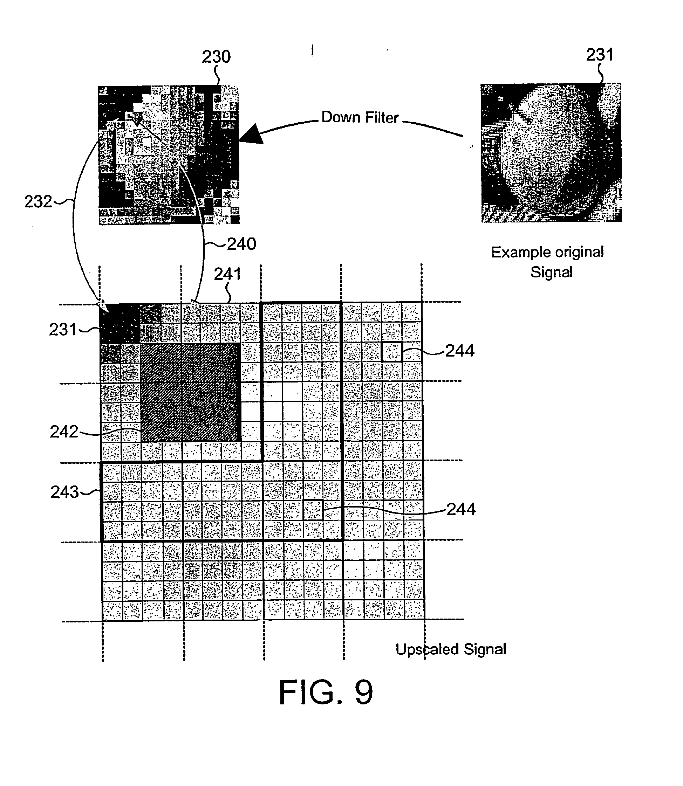

The A and B colour signals must also be up-scaled to produce interpolated values for the four texels of the bilinear block. The manner in which this up-scaling is performed is important for efficiency reasons, and the 'obvious' choices are not the best. For example if one uses a 'standard' linear wavelet filter (e.g. see "Building your own Wavelets at Home", Sweldens and Shroeder, Technical Report 1995:5, Industrial Mathematics Initiative, Department of Mathematics, University of South Carolina) to produce the low frequency terms, the representative colours are 'centred' on the top left pixel of each block. This is illustrated in figure 9. The low-resolution data, '230', has been produced from the original image, '231'. An element of data, '232' from the low-resolution image would correspond to the top left pixel of the 4x4 pixel block '233'. Similarly, another '240', would correspond to the top left pixel of block '241'. All pixels other than the top left of each block are obtained by bilinear interpolation from the top left pixels.

Although this produces reasonably results with regards to quality (with,the possible exception of the imbalance at the edges of the image as mentioned earlier), it has efficiency problems. As described earlier with regard to figure 4c we desire that the representative A and B values be out of phase with the modulation data. To this end, the region of interest from figure 7, i.e. '151' union '152', as shown in the crosshatched area, '242', in figure 9, has been defined to overlap modulation data blocks. To generate all of the texels in this region, not only are the representative colours of the four containing blocks required, but also those of an additional five blocks, as indicated by '243'.

Instead, the invention uses a variation of the above in which the representative colours are oriented on the texel immediately below and to the right of the centre of each block. Two such texels are indicated by '244'. Such texels will be called Block Representative Texels or BRTs, as they indicate the 'location' of the representatives. This scheme guarantees that to generate all the pixels in the region of interest, '242', only the representative colours from the four containing blocks are ever required. (This variant can be implemented by applying the standard linear wavelet to a shifted image).

Using the local pixel coordinate scheme described in figure 7, the colour of the up-scaled signal, i.e. either that of signal A or B, at any pixel in the region of interest, '151' union '152', can be given by the following bilinear equation:

$$u = (X - 2)/4 \qquad \text{....thus } u \in \left\{0, \tfrac{1}{4}, \tfrac{2}{4}, \tfrac{3}{4}, 1\right\}$$

$$v = (Y - 2)/4 \qquad \text{....thus } v \in \left\{0, \tfrac{1}{4}, \tfrac{2}{4}, \tfrac{3}{4}, 1\right\}$$

$$\overline{C}_0 = \overline{L}_{i,j} + u.\left(\overline{L}_{i,j+1} - \overline{L}_{i,j}\right)$$

$$\overline{C}_1 = \overline{L}_{i+1,j} + u.\left(\overline{L}_{i+1,j+1} - \overline{L}_{i+1,j}\right)$$

$$\overline{U}_{YX} = \overline{C}_0 + v.\left(\overline{C}_1 - \overline{C}_0\right)$$

where

($Y,X$) is the coordinate of the pixel relative to the four 4x4 blocks,

$L_{\alpha\beta}$ are the set of low frequency representative colour (vectors) for the four blocks, i.e. either the A or B values, and $U_{YX}$ is the resulting up scaled colour (vector) for the pixel.

Note that these equations must be evaluated for each of the four texels. Further note that in the above, the set of $L_{\alpha\beta}$ colours refer to the 32 bit colour equivalents of the stored values as described earlier.

The decompression process could implement the above equations as presented, but the inventor has appreciated two independent optimisations. The first is a means of performing the interpolation almost directly on the low precision values stored in the data structure and then subsequently converting these interpolated results to the full 32 bit precision. The second and more important innovation is a means of very efficiently generating all four up-scaled pixels in parallel. This method is related to a means of generating a 3D curved surface using binary subdivision.

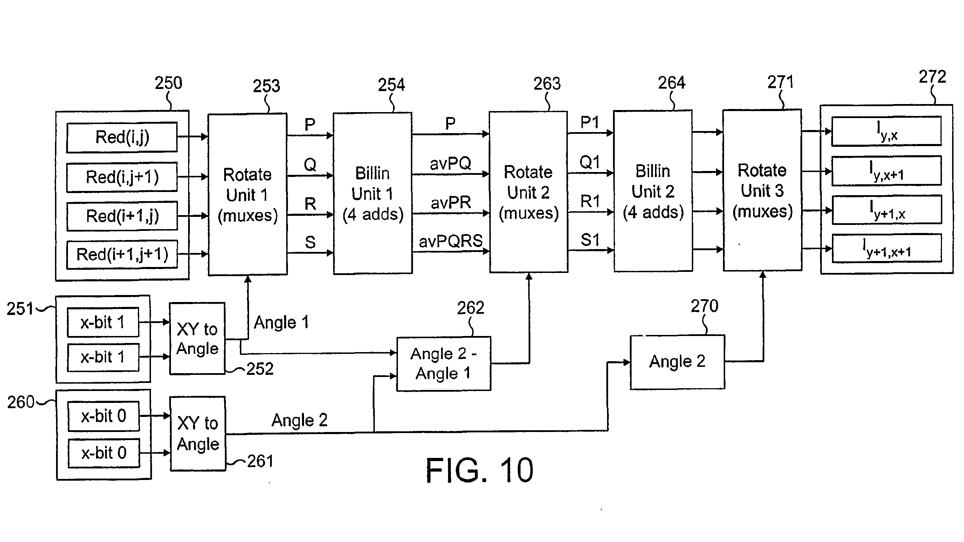

A combination of these two methods is used in the preferred embodiment and will now be explained with regard to figure 10. Only the red channel is shown, but the processing for the blue and green channels is identical. The minor differences for the alpha channel, which has one bit less precision throughout, will be obvious to one skilled in the art. Similarly, only the 'A' signal will be described, but processing for the 'B' signal is almost identical. In the following preferred embodiment description, it should be notated that only one instance of the angle calculation hardware is required as this operation, is identical for all the colour channels contained in both the A and B signals.

Each of the four red components from the four blocks' A representatives is supplied at 5 bits precision, '250'. In the situation where a particular colour has been marked as translucent (via flag '112'), the stored four bit value is first converted to 5 bit precision as described earlier in the document. From the two least significant bits of the x and y coordinates of the TLT, the more significant bits from x and y are extracted, '251', and passed to an "XY to angle" unit, '252'. This unit examines the two bits and identifies an angle of rotation which is one of 0, 90, 180, or 270 degrees. This angle, called angle 1, is encoded as 2 bits and is passed to the rotation unit, '253'. The colour representatives can be considered as lying at the corners of a square - the rotation unit merely 'rotates' the square according to the input angle. The corners of the square, after rotation, are called, in row order, left to right, P, Q, R, and S.

The output of the first rotation unit is then passed to a bilinear unit, '254', which computes the average of P and Q (av PQ), the average of P and R (av PR), and the average of all four input values (av PQRS) and outputs P, av PQ, Av PR and AV PQRS. Note that the output values will require more fractional precision.

The least significant bit of each of the x and y coordinates of the TLT, '260', is supplied to a second angle calculation unit, '261', whose functionality is identical to that of '252'. The computed angle is called Angle 2. In unit '262', Angle 1 is subtrac#ted from Angle 2, "modulo 360 degrees", to produce a difference which is supplied to a second rotation unit, '263'. This again rotates the four input component values and outputs the results, P1, Q1, R1, S1, to a second bilinear unit, '264'. This unit behaves in the same way as '254' except that it will be operating at slightly higher precision due to increased accuracy of the input bits.

Finally, angle 2 is negated "modulo 3 60" in unit '270', and the output fed to a final rotation unit '271'. The output of this, '272', is an intermediate form of the red components of the upscaled A signal which now need to be converted to their equivalent 8bit format.

The "XY to angle" units, '252' and '261', are very simple and their functionality can be precisely described by the following 'pseudo C code' function. This can be trivially translated into VHDL for hardware implementation:

```
int XYtoAngle (input int Xbit, int Ybit)
{
        int Angle;
        if (Xbit==0 && Ybit==0)
        {
                Angle = 0; /*0 degrees*/
```

```
        }
        else if (Xbit==1 && Ybit==0)
        {
                Angle = 1; /*90 degrees*/
        }
        else if (Xbit==1 && Ybit==1)
        {
                Angle = 2; /*180 degrees*/
         }
         else
         {
                Angle = 3; /*270 degrees*/
         }
        return Angle;
    }
```

The "Rotate" units, '253' '263' and '271', are also quite simple and can be implemented by a small set of multiplexers. Again, the functionality is described by "pseudo C code":

```
    void RotateUnit(in int Angle,
                        in int Pin, Qin, Rin, Sin,
                        out int Pout, Qout, Rout, Sout)
    {
        int P1, Q1, R1, S1;
        /*
        // if angle >= 180 (i.e. 2==180 or 3==270)
        */
        if (Angle & 2)
        {
                P1 = Sin;
                Q1 = Rin;
                R1 = Qin;
                S1 = Pin;
        }
        /* Else no rotation */
        else
        {
                P1 = Pin;
                Q1 = Qin;
                R1 = Rin;
                S1 = Sin;
        }
        /*if there's a 90 degree component*/
        if (Angle & 1)
        {
                Pout = Q1:
                Qout = S1;
                Rout = P1;
                Sout = R1;
        }
        /*Else no rotation*/
        else
        {
                Pout = Q1:
                Qout = S1;
                Rout = P1;
                Sout = R1;
        }
    }
```

Note that for efficiency reasons, the number of input and output bits of the multiplexer should be set to the minimum number of bits required to maintain full accuracy. For example, the rotation unit, '253' operates only 5 bit values.

On the other hand, '263' would receive five 'significant' bits for 'Pin', six bits for each of 'Qin' and 'Rin', and seven 'significant' bits for 'Sin'. Each of the output values would have seven significant digits. These numbers will be apparent to one skilled in computer arithmetic on explanation of the bilinear units, '254' and 264'.

The bilinear units, '254' and '264' can be described, once again using 'pseudo C code':

```
void BilinearStep (in int Pin, Qin, Rin, Sin,
            out int Pout, avPQx2, avPRx2, avPQRSx4)
{
        int TempAvRSx2;
        Pout = Pin;
        avPQx2 = Pin + Qin;
        avPRx2 = Pin + Rin;
        TempAvRSx2 = Rin + Sin;
        avPQRSx4 = avPQx2 + TempAvRSx2;
}
```

To give all the output values the same binary fixed point, the Pout value should be 'multiplied by 4', i.e. have two zero bits appended in the least significant position, while the avPQx2 and avPRx2, need to be 'multiplied by 2', i.e. have a single zero bit appended. In hardware, this accuracy normalisation process can actually be carried out within the following rotation units, '263' and '271' respectively, thus minimising the size of the multiplexers within those units. For reasons of economy, the output precision of the '264' unit, which would otherwise be 9 bits, is truncated to 8 bits with no significant degradation to quality.

The one remaining operation for the bilinear upscaling is that of converting the intermediate channel results, '272', to the 8 bit equivalents. For the R, G, and B signals, these values currently have 8 bits precision, in "5.3" format, i.e. 5 bits representing values larger than the binary point, and 3 fractional bits. The following operation is used to convert the format:

```
int Convert5p3to8 (in int Val5p3)
{
        int out;
        out = Val5p3 + (Val5p3 » 5);
          return out;
 }
```

For the case of the alpha component, the final intermediate precision at '272' is also an 8 bit result, but is in the form "4:4". This is converted using the following:

```
int Convert4p4to8 (in int Val4p4)
{
        int out;
        out = Val4p4 + (Val4p4 » 4);
        return out;
}
```

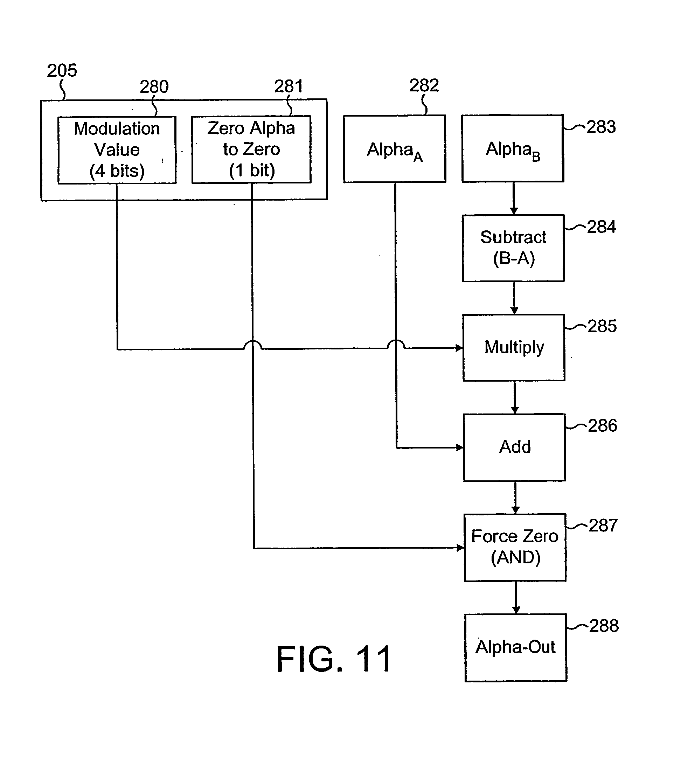

The last step of the decompression process is to blend the four modulation values with their respective A and B signal pixels and, where necessary, force the alpha to be zero. The hardware for one of the 4 bilinear pixels illustrating just the alpha channel is shown in figure 11. The five bit modulation information, '205', determined in figure 6, is split into the four bit modulation value, '280', and the 'force alpha to zero' flag, '281'. The eight bit alpha values, '282' and '283', corresponding to the output of the bilinear expansion of signals A and B are supplied to a subtract unit, '284', producing a signed 9 bit result. This result is multiplied, '285', by the four bit value '280', which represents a value in the range 0..1, to produce a 12 bit signed result in the format "9.3". This only has 12 bits and not 13 due to the restricted range of '280'. Finally, this is added to the 'A' value, '282' in '286', and the three fractional bits and the single sign bit are discarded to give an 8 bit result. Because of the mathematics involved, the result is guaranteed to be positive and in the range 0 to 255 inclusive. Finally, if the texel was actually marked as punch-through, indicated by the '281' flag, the computed value is forced to be zero, '287'. The result, '288' represents the alpha value for the given texel. The hardware for the red, green and blue channels is identical to that of the alpha except that there is no "force Zero" unit, '288'.

In the main graphics library standards, there is also the requirement for special behaviour for the repetition of textures. Such operations, which can be applied independently to the x and y dimensions, include repeating the texture ad-infinitum, reversing the direction on every second repeat of the texture, or simply clamping the texels to the boundary.

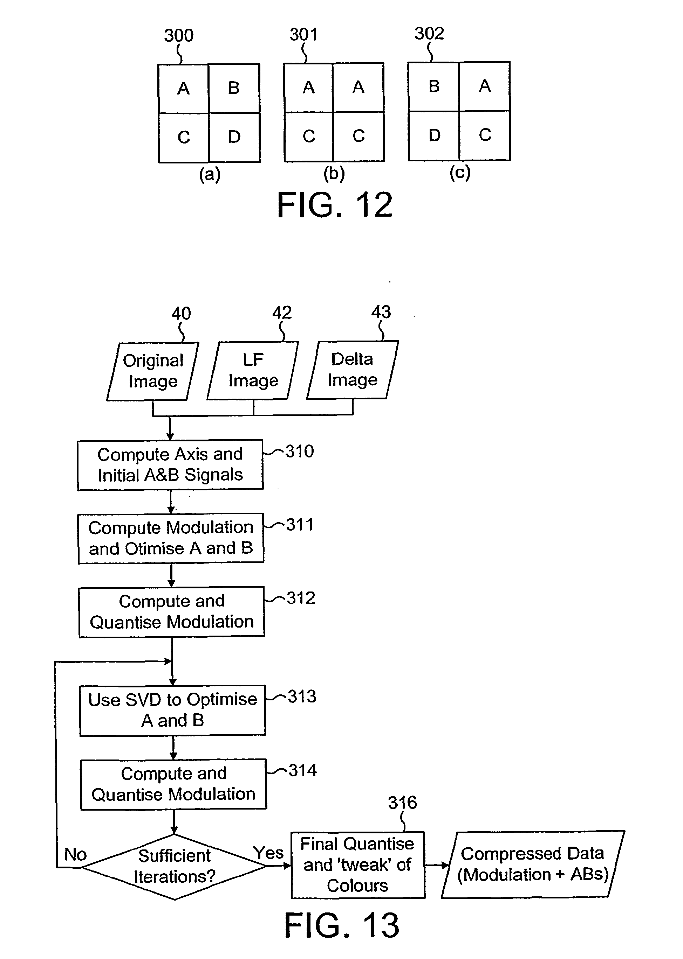

These operations can be performed by passing a set of signals from the original pixel location calculation, with respect to the chosen repetition mode, to indicate one of three options available independently for the x and y dimensions. The options for the x direction are shown in figure 12. These are to not modify the output, '300', copy the left pair to the right pair, '301', or to swap the left and right pairs of output texels '302'. The options for the y dimension are analogous.

4 BPP Compression method

Although the decompression process is relatively straightforward, that of the compression is much more involved. Returning to figure 4a, the compression process in the preferred embodiment begins with down filtering the original image, '40', by a factor of four in both dimensions using the modified linear wavelet transform described previously, i.e., one that 'centres' the representative values on the BRTs. The high frequency information from the wavelet transform is thrown away leaving the low frequency terms, '41'. This is then upscaled using the bilinear expansion, '42'. The difference between the low frequency signal and the original image is computed, '43'.

An overview of the remainder of the process is given in figure 13. In step '310', the method takes as input the original image, '40', the low frequency version, '42', and the delta image, '43', and from these signals, an 'axis' image is generated. This represents the filtered direction of maximum components of the delta signal. From this and the original and delta signals, the initial A and B signals are generated.

In step '311', modulation values for each pixel are computed from the original image and the initial A and B signals, which are then partitioned into quantised sets and used to optimise the initial A and B signals.

In step '312', the modulation values are recomputed from the updated A and B signals, and these are quantised choosing the best modulation mode for each block.

In step '313', using the chosen quantised modulation values, the A and B signals are set to the 'optimum' values by 'solving' for the minimum least squares error on overlapping regions of pixels by using Singular Value Decomposition, SVD. This technique comes from the fields of linear algebra and numerical mathematics. A discussion of singular value decomposition is presented in "Numerical Recipes in C" by Press et al. (Cambridge University Press, ISBN 0-521-43108-5).

From the updated A and B values, new modulation values are computed and quantised, '314', using the same technique as step '312'. Step '315', repeats the '313' and '314' optimisation steps a number of times. Finally, the colours are quantised and stored, '316' although an optional step could 'tweak' the stored values slightly to attempt to get a better representation of the original image.

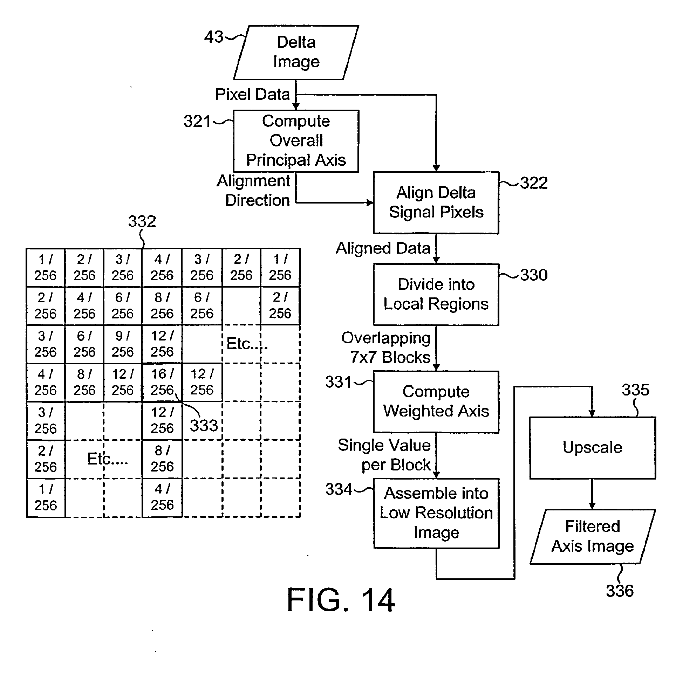

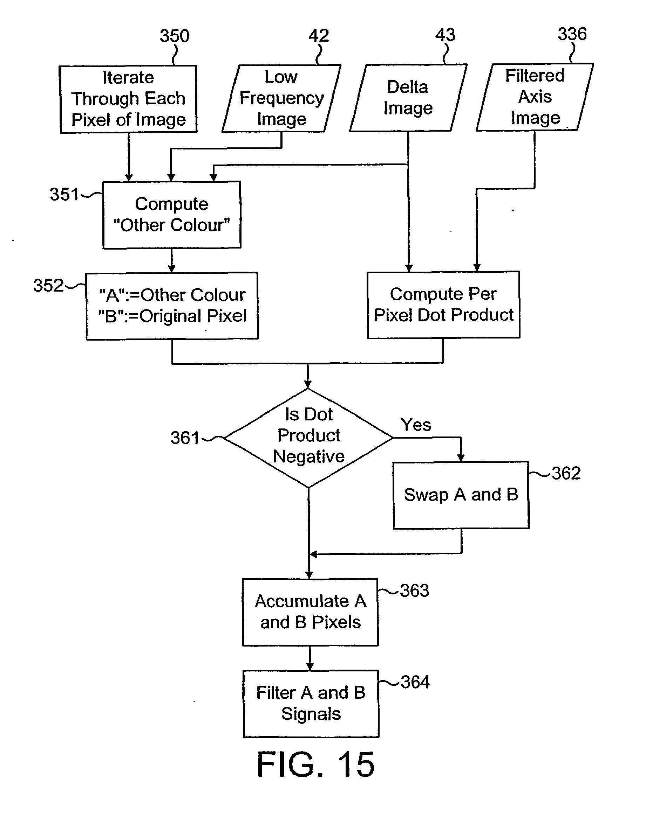

Figures 14 and 15 describe the operations performed in step '310'. With regard to the figure 14, the delta signal, '43', is now analysed, '321', to find the overall principal axis of the data. This type of analysis, for example as described by Wu ("Color Quantization by Dynamic Programming and Principal Analysis", Xiaolin Wu, ACM Transactions on Graphics, Vol. 11, No. 4, Oct. 1992, pp 348-372), or Iourcha, (US patent 5,956,431), first computes the covariance matrix of the input data and then finds the principal eigenvector of that matrix. The principal eigenvector then represents the major axis running through the data.

The invention uses a method that has two minor modifications from those in the art just described. The first is the minor point that, rather than being three-dimensional, the colour vectors include an alpha component thus making them and the principal axis four dimensional, and the covariance matrix 4x4. The second, and more important difference is that the delta vectors are assumed to be symmetrical about the origin. This could be achieved by using each delta value twice in the evaluation of the covariance matrix, in which the components are negated on the second use. A far cheaper method, however, is to simply assume that the averages of each component are zero. This is expressed below:

$$M_{\text{covar}} = \begin{bmatrix} C_{RR} & C_{RG} & C_{RB} & C_{RA} \\ C_{RG} & C_{GG} & C_{GB} & C_{GA} \\ C_{RB} & C_{GB} & C_{BB} & C_{BA} \\ C_{RA} & C_{GA} & C_{BA} & C_{AA} \end{bmatrix}$$

$$C_{\phi\theta} = \frac{1}{n}\sum_{i=1..n} w_i.\phi_i\theta_i - \overline{\phi}.\overline{\theta}$$

where $M_{\text{covr}}$ is the required covariance matrix,

$R_i, G_i, B_i, A_i$ are the colour components for pixel i,

$W_i$ is the weight, or importance, of the sample pixel (in this situation = 1)

$n$ is the number of samples,

$\phi$ and $\theta$ represent a choice of (potentially the same) colour channels, and $C_{\phi\theta}$ is the covariance of $\phi, \theta$.

Since the compression method assumes symmetry about the origin, the averages in the above covariance equation can be assumed to be zero, simplifying the evaluation. The eigenvector of the matrix is computed and this becomes the overall axis. In the alignment step, '322', each pixel of the original delta data, '43', is compared with the overall axis by taking the dot product of that pixel and the axis. If the scalar result is negative, the delta pixel is 'flipped' by negating each component.

The 'axis aligned' delta data is then divided into overlapping, 7x7 pixel blocks, '330'. These dimensions correspond to $(2.PixelBlock_{Height}\text{-}1).(2.PixelBlock_{width}\text{-}1)$. Each of these overlapping blocks is centred on a BRT and represents the region directly influenced by representative colours. The principal axis for each local region is calculated, '331', using a weighted filter. The per pixel weights are shown by '332', with the centre and most significant weight, '333', aligned on the BRT. These weights correspond to the bilinear filter weights for the representative colours in that local region scaled so the sum of the weights is 1.0. All other aspects of the principal vector calculation (i.e. the creation of the covariance matrix and eigenvector calculation) are the same as before.

The resulting principal vectors are reassembled to form a low-resolution image, '334', which is a ¼ the resolution in x and y. This is then bilinearly scaled up, '335', to form the filtered axis image, '336'.

The next part of '310' is to compute initial guesses for the A and B signals. With reference to figure 15, the process involves stepping, '350' through each pixel of the image. From the each pixel of the image an alternative 'other' pixel is computed, '351', by selecting the corresponding pixel from the delta image, '43' and subtracting it from the low frequency signal, '42'. (Note that adding these two pixels results in the pixel from the original image). This 'other' pixel is 'temporarily' assigned to a per-pixel "A" value and the pixel from the original image is assigned to a per-pixel "B" value, '352'.

The dot product of the corresponding pixels from the delta image, '43', and the filtered axis signal, '336' is also computed, '360'. If the sign of this result, '361', is negative, then the assigned 'A' and 'B' values for the pixel are swapped, '362', otherwise they are left as they are. The individual per-pixel A and B colours are reassembled into two images, '363', and these are down scaled, '364', to produce starting A and B representatives for each block. These values are stored for later use. The values are also bilinearly scaled up to produce low frequency "Initial A" and "Initial B" signals.

The first step of '311' is to compute an initial set of modulation values for the image from the initial low frequency estimates "Initial A" and "Initial B". The following mathematics is used to obtain the modulation scalar value, m, for each pixel:

$$m = \frac{(\overline{O}-\overline{A})(\overline{B}-\overline{A})}{(\overline{B}-\overline{A})(\overline{B}-\overline{A})}$$

where

O is the corresponding pixel (a vector) in the original texture and

$\overline{A}$ & $\overline{B}$ are the corresponding pixels in the (initial) low frequency (scale up) A and B (vector) signals.

In the event of a zero denominator, the result is assumed to be zero. The modulation values can be treated as a monochrome image.

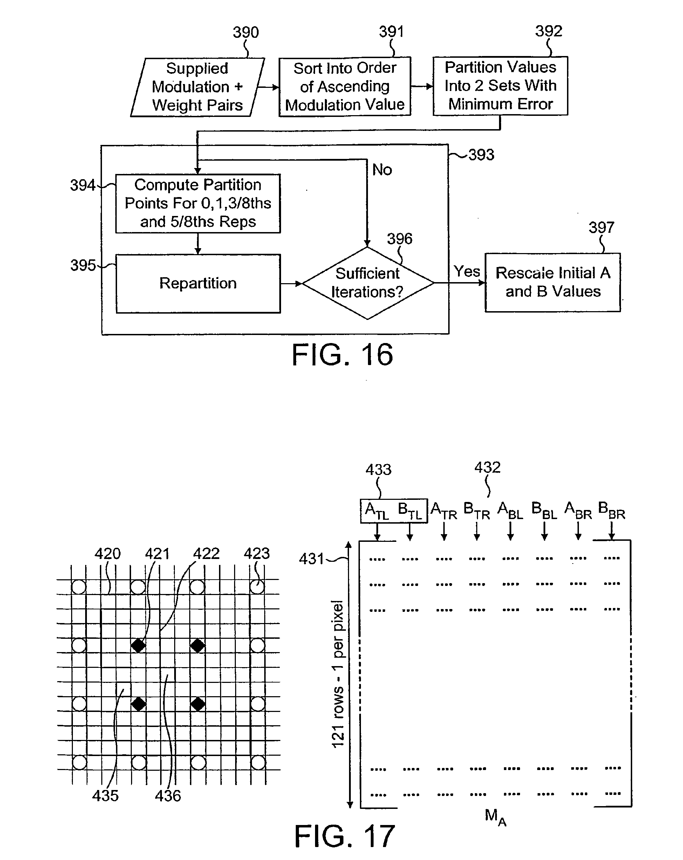

Using this initial set of modulation values, a pass of optimising the per-block A and B representative values signals is performed. Again using the filter kernel defined by '332', the image is divided into overlapping 7x7 regions centred on the BRTs. With reference to figure 16, the 7x7 modulation values and associated weight pairs, '390' are sorted into ascending order of modulation value, '391'. These sorted elements are then partitioned into 2 sets, $P$ and $Q$ such that,

$\forall p \in P$ and $\forall q \in Q$, $p_{mod} < q_{mod}$ and where the error, E,

$$E = \sum_{p \in P} p_{weight}(p_{mod} - p_{wav})^2 + \sum_{q \in Q} q_{weight}(q_{mod} - q_{wav})^2$$

is a minimum. In this equation,

$$p_{wav} = \frac{\sum_{p \in P} p_{\text{weight}} \cdot p_{\text{mod}}}{\sum_{p \in P} p_{\text{weight}}} \qquad q_{wav} = \frac{\sum_{q \in Q} q_{\text{weight}} \cdot q_{\text{mod}}}{\sum_{q \in Q} q_{\text{weight}}}$$

are weighted averages.

Note that finding the partitioning that gives minimum error can be computed in linear time by observing

$$E_{PartionP} = \sum_{p \in P} p_{weight} \cdot \left( p_{\text{mod}} - p_{wav} \right)^2$$

$$= \sum_{p \in P} p_{weight} \cdot p_{\text{mod}}^2 - \frac{\left( \sum_{p \in P} p_{weight} \cdot p_{\text{mod}} \right)^2}{\left( \sum_{p \in P} p_{weight} \right)}$$

can be updated incrementally in constant time. Thus the errors due to each partition can be quickly updated as the partition point is swept through the set of values.

Once the initial pair of partitions has been computed, the sets can be split further into four corresponding to the main four modulation quantisation levels, i.e. 0.0, 3/8, 5/8, and 1.0. For speed reasons, a simple Generalised Lloyd's Algorithm, GLA, is used, '393'.

The first step, '394', of this algorithm consists of the equivalent of computing the representative values for 0 and 1, which are simply the weighted averages, $p_{wav}$ and $q_{wav}$, and finding the 'equivalent' of the two implied the fractional representatives, which are the obvious linear blends of these two. The modulation values are now repartitioned, '395', into these new categories. Any modulation value less $\frac{13}{16} p_{wav} + \frac{3}{16} q_{wav}$ is assigned to the new "0" (i,e, p) set and any greater than $\frac{3}{16} p_{wav} + \frac{13}{16} q_{wav}$ is assigned to the "1" (i.e. q) set. For the present, the other two sets are not needed. The $p_{wav}$ and $q_{wav}$ values corresponding to the new sets are then computed.

If a predetermined number of iterations have not yet been performed, '396', the GLA repeats steps '394' and '395'. After sufficient operations, in step '397' the final representative values for set "0" and set "1", i.e. $p_{wav}$ and $q_{wav}$, are used to modify the representative A and B values for this region using:

$$\overline{A}_{new} = \overline{A}_{original} + p_{wav} \cdot \left( \overline{B}_{original} - \overline{A}_{original} \right)$$

$$\overline{B}_{new} = \overline{A}_{original} + q_{wav} \cdot \left( \overline{B}_{original} - \overline{A}_{original} \right)$$

In step '312' the modulation values are again computed using the mathematics described for the first part of step '311'. For each 4x4 block in the image, the computed modulation values are quantised to the set of values, {0,3/8, 5/8,1}, and to the set (0, ½, 1). The set of quantised levels which results in the least quantisation error, is chosen for the mode of the block. (In the case of blocks that contain punch-through pixels, however, the latter mode is automatically chosen.) The modulation values are set to their quantised levels.

In step '313' the chosen quantised modulation values are then used to recompute optimised A and B values using singular value decomposition, or SVD. This phase uses SVD to optimise an arbitrary set of, preferably neighbouring, A and B representative pairs. This is done by selecting the pixels whose compressed results are determined by the chosen set of A and B pairs and retrieving both their original pixel colours and their chosen quantised modulation values. In theory, the technique could be applied to the entire image in one single step. The SVD algorithm, however, has $O(n^3)$ run time, where n is the number of pixels, and so this would be very expensive. In the preferred embodiment, the optimisation is repeatedly performed on sets of four pairs of A and B values at a time, with one such set shown in figure 17.

The 11x11 pixel region, '420', is directly affected by the four pairs of A and B values, the positions of which are indicated by dark diamonds. The top left of these is shown by '421'. The size of this pixel region is determined by *(3.PixelBlock_height-1)3.PixelBlock_width-1)*. For reference, the 4x4 pixel block containing '421' is shown by '422'. A further twelve AB pairs, as indicated by grey circles, also affect the region. One such pair is '423'. The twelve outer pairs are held constant when new optimum values for the corresponding group of four AB pairs are computed

A matrix, $M_A$, shown as '430', is constructed with 121 rows and 8 columns. Each row, '431', corresponds to a unique pixel in the region, '420', and each column, '432', corresponds to the 'influence' each of the eight AB values, i.e. four pairs, has on that pixel. In the example, the values corresponding to AB pair '421' have been assigned to the first two columns, '433'. The influence of a particular value is determined by the bilinear weight associated with the pixel and the AB location, and the modulation value assigned to the pixel. For example, assume pixel '435' has an assigned quantised modulation value of $m_1$. It would have the following corresponding row in $M_A$:

$$\left[ (1-m_1)\frac{3}{16}, \quad m_1\frac{3}{16}, \quad 0, \quad 0, \quad (1-m_1)\frac{9}{16}, \quad m_1\frac{9}{16}, \quad 0, \quad 0 \right]$$

Note that only the left AB pairs affect pixel '435', while for pixel '436' with modulation value $m_2$, the corresponding row is

$$\left[ (1-m_2)\frac{4}{16}, \quad m_2\frac{4}{16}, \quad (1-m_2)\frac{4}{16}, \quad m_2\frac{4}{16}, \quad (1-m_2)\frac{4}{16}, \quad m_2\frac{4}{16}, \quad (1-m_2)\frac{4}{16} \quad m_2\frac{4}{16} \right]$$

A second matrix, $M_B$, is also constructed which has 121 rows and 4 columns with the columns corresponding to the red, green, blue, and alpha channel. This matrix contains the pixel values of the region, '420', except that any components of the pixels that would be due to the 12 outer pairs, such as '423', are removed by subtraction.

The eight unknown optimum A and B values are represented by the 8 element column vector *X*. To determine *X*, we need to 'solve' the following linear expression such that the least squared error is minimised.

$$M_A.\overline{X} = M_B$$

Given this system of equations, the SVD technique will return the optimum vector *X*. The new A and B values are extracted and replace the original values for this region. These steps are repeated for all, or some subset of, such four AB pair groups.

In step '316' the A and B colour values are quantised. An optional operation can be performed to test slight variants of the quantised levels, e.g. via a genetic algorithm, to see if improvements the overall accuracy of the compressed image can be achieved.

The final quantised A and B values, modulation values, and per-block modulation mode are now packed into the format described earlier and stored for used by the decompression system.

## 2 BPP method

The 2BPP method represents a variation on the 4BPP scheme and so only the major differences between the two need be presented.

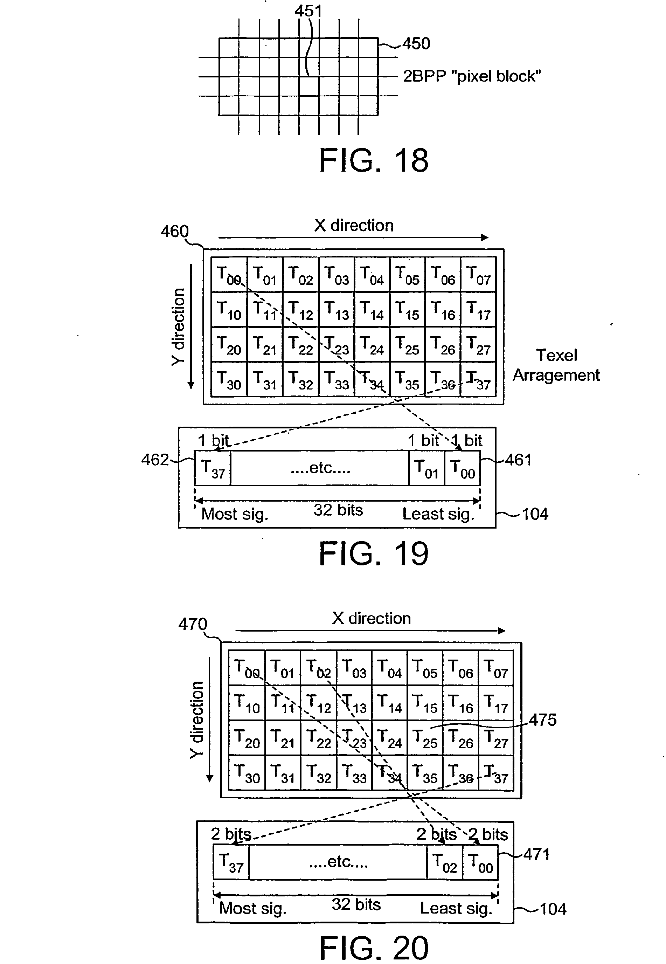

As shown in figure 18, the the 'blocks' are extended to be 4x8 (Y*X) pixels in size, '450'. The position of the BRT, '451', of each block is again set to be the texel immediately below and to the right of the centre of the block. The bilinear upscale clearly is performed with an additional twofold expansion in the x direction.

As with the 4BPP mode, each block is stored using 64 bits, each with the same four data fields, as shown in '100' in figure 5. Colour representation, '110' and '111', is identical to that of the 4BPP mode. The only difference is the way in which the 32 bits of modulation data, '104', and the modulation mode flag, '103', are interpreted.

If the modulation mode flag, '103', is set to zero, then the bits are interpreted in a manner as illustrated by figure 19. Each of the 32 pixels' modulation values in the block, '460', is encoded using a single bit. As before, the top left pixel is stored in the least significant location, '461', and the bottom right in the most significant, '462'. A stored zero value indicates a modulation value of 0.0, and a one indicates 1.0.

If the mode flag, '103', is set to one, only every second pixel is explicitly encoded, as shown in figure 20. In the pixel block, '470', only the modulation value for texels that are marked as 'white' are stored, using two bits per texel. The encoding of these texels is identical to that of the first 4BPP mode, in which the four possible modulation values when decoded are {0, 3/8, 5/8, 1}. As before, the top left pixel's modulation value is stored in the least significant 2 bits, '471', and the bottom right's value is in the most significant bits.

The remaining 'grey' texels in the chequer board pattern have their modulation values implied by the average of the immediately surrounding four 'white' texels. For example, texel

$T_{2,5}$, indicated by '475', has its modulation value implied by the average of texels

$T_{1,5}$, $T_{2,4}$, $T_{2,6}$ and $T_{3,5}$. 'Grey' texels on the edge of a block use the neighbouring blocks' 'white' texel modulation values.

To minimise the cost of the subsequent modulation operation, the computed average is rounded to the nearest $1/8^{th}$ value. More precisely, if $m_a$ $m_b$ $m_c$ and $m_d$ are the 'white' modulation values surrounding a 'grey' texel, then the grey's modulation value is given by:

$$m_{grey} = \frac{\left\lfloor 2\left(m_a + m_b + m_c + m_d\right) + \frac{1}{2} \right\rfloor}{8}$$

Alternative Implementations

An alternative embodiment could store the two per-block colours as an average and a difference of the two original colours, with more bits of precision being assigned to the average and less to the difference. This system would generally work better for natural images but would be inferior for diagrams. An alternative colour space, such as YUV + alpha, could also be used to represent the per-block colours.

Another alternative could store the modulation values in a transform encoded manner, such as using DCT, hadamard transforms, or one or two wavelet passes. Some number of the less significant higher frequency terms could be discarded. Again, this approach works reasonably well with natural images but often fails with diagrams.

Although it requires additional memory accesses and evaluation cost, using a biquadratic or bicubic interpolation can improve the quality of the compressed image. In such a system, it may be beneficial to store all the base colours separately to the modulation information.

In the embodiment described, it was assumed that the texturing filtering was done in a latter stage of the 3D hardware since such hardware would likely need to also support non-compressed textures. An alternative embodiment could simplify the hardware by incorporating the filtering as part of the texture decompression. This could be further extended to a cheaper filtering mode that approximates a bilinear, or more complex filter, by first filtering the modulation values and then applying the filtered modulation value to the up-scaled A and B signals. Because the modulation values are scalars, i.e. of a lower dimension than the originally output texels, this would reduce the overall hardware costs.

If higher rates of compression were required, the system could be adapted to use secondary look-up tables. This could be done in two independent ways: The stored colours could be replaced with indices into the table and/or the modulation information could also be reduced to an index into a different table.

An alternative embodiment of the 2 BPP could implement additional modulation modes. When the mode flag '103' of a block is set to 1, the precision of the T00 texel modulation value in that block would be reduced from 2 bits to 1 bit. The 'unused' bit would then become a further mode select flat, Sel1. If Sel1 is 0, then the 'grey' texes in figure 20 would be produced in exactly the same manner as previously described. When Sell is 1, however, the precision of T24's modulation value would be also be reduced to 1 bit. The 'unused' bit would then become yet another mode select flag, Set2. If Sel2 is 0, then the implied 'grey' pixel modulation values would be produced by averaging only the immediate two horizontal neighbours. If Sel2 is 1 then vertical neighbours are averaged.

Another alternative embodiment might use an additional mode bit to indicate other encodings, thus giving a total of four modes. Two would be the two modulation modes already presented, while the other two modes could be used to emulate modes. For example, one mode could be used so that within a block, the decompression approximates the behaviour of S3TC, so that rather than interpolating the A and B colours from block to block, they would remain constant within that block. Another additional mode would be to use the modulation values directly as indices into the

EP 1 461 772 B1

local neighbourhood of colour values. Although not identical, this would have similar image properties to the "Colour Distribution" or FXT1 "CC_CHROMA" texture compression methods.

<u>Alternative Application</u>

The method can also be extended to support three (or higher) dimensional textures. The low frequency signals are simply interpolated over three (or more) dimensions rather than two, and the rectangular blocks of pixels are extended to become rectangular prisms.

Although the A & B signals have been described as representing colour images, the invention is by no means limited to this. For example, the A and B representative values could be monochromatic for grey scale images, or store two dimensions for UV perturbation texture mapping. Alternatively, the A & B values could be interpreted as bump map vector normals, either encoded as (x, y, z) or by the 2 dimensional optimisations presented in our EPO patent application 98 939 751.8.

Furthermore, the A and B signals need not be considered as 2 dimensional images. For example, discarding one of the dimensions, e.g. only using linear rather than bilinear interpolation, would allow the method to be applied to the compression of sound.

The technique can even be applied to related fields such as 3D modelling. It would provide a means of compression/storage/reconstruction of complex surface models by merging curved surfaces (e.g. those expressed with bicubic surfaces) with displacement mapping, by using bounding surfaces and a low precision modulating texture map.

It should be noted that features described by reference to particular figures and at different points of the description may be used in combinations other than those particularly described or shown. All such modifications are encompassed within the scope of the invention as set forth in the following claims.

With respect to the above description, it is to be realised that equivalent apparatus and methods are deemed readily apparent to one skilled in the art, and all equivalent apparatus and methods to those illustrated in the drawings and described in the specification are intended to be encompassed by the present invention. Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the claims.

**Claims**

1. A method of compressing image, texture or sound source data, the compressed data representing a plurality of elements of a source data array, the method comprising the steps of:

   a) down filtering the source data to obtain low resolution data (41) and generating from the low resolution data at least two sets of reduced size low resolution data (A', B'), the individual elements of each set of reduced size low resolution data (A',B') being representative of a plurality of elements of the source data;
   b) using the source data to generate modulation data (52), each element of the modulation data specifying how to combine low frequency data (A,B) obtained by upscaling the sets of reduced size low resolution data (A', B') to generate an approximation to the source data; and
   c) storing the at least two sets of reduced size low resolution data (A', B') and modulation data as compressed data.

2. A method according to claim 1, wherein the step of generating the sets of reduced size low resolution data (A', B') further comprises the steps of:

   a) upscaling the low resolution data (41) to produce first level low frequency data (42) approximating the source data and having the same number of elements as the source data;
   b) generating difference data (43) from the source data and the first level low frequency data (42);
   c) using the first level low frequency data (42) and the difference data (43) to generate at least two sets of second level low frequency data (50,51); and d) reducing the size of each set of second level low frequency data by down filtering to produce the sets of reduced size low resolution data (A', B').

3. A method according to claim 2, wherein the step of generating the modulation data (52) further comprises using the source data and the sets of second level low frequency data (50,51) to generate a plurality of modulation values, each modulation value representing for each element of the source data how the sets of second level low frequency data (50,51) should be combined to approximate the source data, each modulation value being stored as an element of the modulation data.

4. A method according to claim 2, wherein the step of generating the modulation data (52) further comprises the steps of :

a) using the source data and the sets of second level low frequency data (50,51) to generate a plurality of modulation values, each modulation value representing for each element of the source data how the sets of second level low frequency data (50,51) should be combined to approximate the source data; and
b) generating modulation data having the same number of elements as the reduced size data, each element of the modulation data being representative of a plurality of modulation values.

5. A method according to claim 4, wherein each modulation value is stored in 2 bits.

6. A method according to claim 4, wherein every other modulation value is stored, each stored modulation value occupying 2 bits, and the remaining modulation values are represented implicitly by the average of the neighbouring stored modulation values.

7. A method according to claim 4, wherein each modulation value is stored in 1 bit.

8. A method according to any of the preceding claims, wherein only two sets of reduced size data are generated.

9. A method according to any of claims 2 to 7, wherein the source data is image or texture data and further comprising computing principle axis data representing the direction of maximum components of the difference data.

10. A method according to claim 9, wherein computing the principle axis data further comprises the steps of :

a) assuming that the average of each element of the difference data is zero and determining the covariance matrix of the difference data;
b) determining the principle eigenvector of the covariance matrix; and
c) using the principle eigenvector to locate the principle axis data of the difference data.

11. A method according to either of claims 9 or 10, further comprising calculation of filtered axis data by the following steps:

a) computing the dot product of each element of the difference data with the principle axis data;
b) producing aligned difference data by negating the element of the difference data if step (a) produces a negative scalar result;
c) dividing the aligned difference data into overlapping blocks of elements;
d) calculating the principle eigenvectors from the covariance matrix of each block;
e) assembling the resulting principle eigenvectors to form third level low frequency data; and
f) scaling the third level low frequency data to generate filtered axis data.

12. A method according to claim 11, wherein the second set of second level low frequency data is substantially the same as the first level low frequency data and the first set of second level low frequency data is calculated by subtracting the difference data from the first level low frequency data and further comprising the steps of:

a) calculating the dot product of each element of the difference data with the corresponding element of the filtered axis data; and
b) where the dot product calculated in step (a) is negative, swapping the values of corresponding elements in the first set of second level low frequency data and the second set of second level low frequency data.

13. A method according to claim 2, wherein the step of generating the modulation data comprises estimating the modulation value, m, for each element of data using the function:

$$m = \frac{(\bar{O}-\bar{A})(\bar{B}-\bar{A})}{(\bar{B}-\bar{A})(\bar{B}-\bar{A})}$$

where

$\overline{O}$ is the element of the original data,

$\overline{A}$ is the corresponding element of the first set of second level low frequency data, and $\overline{B}$ is the corresponding element of the second set of second level low frequency data.

14. A method according to claim 2, further comprising grouping modulation values in overlapping local regions into at least two sets, using the grouped modulation values to improve the sets of second level low frequency data and calculating new modulation data from the improved sets of second level low frequency data.

15. A method according to claim 14, wherein optimised sets of second level low frequency data and modulation data are produced by iteratively improving the data.

16. A method according to any of the preceding claims, wherein step (a) of claim 1 comprises applying a wavelet transform to the original data, discarding high frequency information and retaining low frequency information in the reduced size data.

17. A method according to claim 16, wherein the wavelet transform is a modified linear wavelet transform.

18. A method according to claim 2, wherein the source data is image or texture data and the step of upscaling the low resolution data is performed by bilinear expansion.

19. A method according to any of the preceding claims, wherein the sets of reduced size data are quantised before being stored.

20. A method according to claim 19, wherein one set of reduced size data is quantised to allow storage in 16 bits and another set of reduced size data is quantised to allow storage in 15 bits.

21. A method according to claim 20, wherein the source data is image or texture data and each element of each set of reduced size data comprise red, green, blue and alpha component data, the respective sizes of the component data being determined by whether the element is translucent or opaque.

22. A method according to claim 21, wherein for opaque elements the component data is stored as a one bit opaque flag, a five bit red component, a five bit green component, and the blue component is stored in five bits for one set of reduced size data and four bits for another set of reduced size data.

23. A method according to claim 21, wherein for translucent elements, the component data is stored as a one bit opaque flag 3 bit alpha component, four bit red component, four bit green component and the blue component is stored in four bits for one set of reduced size data and three bits for another set of reduced size data.

24. A method according to any of the preceding claims, wherein the source data is image or texture data and each element of each set of reduced size data is representative of a block of elements of the original data measuring four elements by four elements.

25. A method according to claim 24, wherein four elements of the sets of reduced size data are required to apply texture to a single element of full size data.

26. A method of decompressing compressed image, texture or sound source data, the compressed data comprising at least two sets of reduced size data (A', B') and modulation data defining how upscaled data (A,B) from the sets of reduced size data (A', B') should be combined to generate an approximation to the source data, the method comprising the steps of :

    a) identifying for each set of N elements of the source data at least one corresponding element in each set of reduced size data;
    b) using the corresponding elements of reduced size data to upscale each set of reduced size data to produce a set of N element low frequency data;
    c) identifying the corresponding element of the modulation data and separating the element of the modulation data into N modulation values;
    d) weighting corresponding elements of each set of N element low frequency data using the relevant modulation value to form sets of N element weighted low frequency data;

e) combining the corresponding elements of the sets of N element weighted low frequency data to generate an approximation to the N element portion of the source data.

27. A method according to claim 26, wherein steps (a), (b), (c) and (d) are performed on every element of each set of reduced size data and every element of the modulation data to generate an approximation to the entire source data.

28. A method according to claim 26, wherein steps (a), (b), (c) and (d) are performed on a block of P elements of each set of reduced size data and a block of the corresponding P elements of the modulation data to generate an approximation to a block of PxN elements of the source data.

29. A method according to any of claims 26 to 28, wherein an element of the sets of reduced size data and an element of the modulation data correspond to 16 elements of the source data.

30. A method according to claim 29, wherein the source data is image or texture data and an element of the sets of reduced size data and an element of the modulation data correspond to a block of elements of the source data arranged in a four element by four element array.

31. A method according to claim 28. wherein the source data is image or texture data and P is 4 and N is 16, the elements of the source data are estimated by processing four elements of the sets of reduced size data and modulation data, each element of the sets of reduced size data and modulation data corresponding to a block of 4x4 elements of source data, the 4x4 blocks being arranged in a non- overlapping 2x2 array.

32. A method according to claim 26, wherein the compressed data is texture data, each element of the compressed texture data represents a block of 4x4 elements of the original texture data, the compressed data further comprising modulation flag data, each element of each set of reduced size data storing a block representative value of the value of the corresponding block of 4x4 elements of the source texture data, each element of the modulation data comprising 16 component modulation values for regenerating uncompressed texture data from the sets of reduced size data, and each element of the modulation flag data modifying the interpretation of the modulation data, wherein:

step (a) further comprises identifying a block of 2x2 elements of full size data required for texturing an element of an object;

steps (b) and (c) further comprise identifying four elements of each set of reduced size data, modulation data and modulation flag data which are required to generate the 2x2 elements of the full size data; and

steps (d) and (e) decompress the four identified elements simultaneously to produce the required 2x2 elements of source texture data.

33. A method according to claim 32, wherein decompressing the four identified elements further comprises:

a) mapping the location of each element of the 2x2 block of texture data to determine whether the element lies at the block representative element of a 4x4 block;

b) for each element of the 2x2 block of texture data which lies at a location other than a block representative element, combining the representative value of the 4x4 block with at least one of the representative values of the neighbouring 4x4 blocks to generate a modified representative value;

c) for each element of the 2x2 block of texture data which lies in the block representative element of a block, setting the modified representative value to the representative value of the block ;

d) combining the modified representative values with the modulation data to generate 2x2 texture data.

34. A method according to claim 32, wherein the step of decompressing the four identified elements further comprises the steps of :

a) separating from the identified modulation data elements four relevant component modulation values;

b) combining the four relevant component values for each identified modulation data element with the corresponding element of the modulation flag data to form four sets of modulation decode data; and

c) applying each set of modulation decode data to the relevant element of the identified reduced size data to generate the required 2x2 elements of source texture data.

35. A method according to any of claims 26 to 34, wherein the decompressed data is decompressed texture data applied to texture an object.

**36.** Apparatus for compressing image, texture or sound source data, the apparatus comprising:

a) an input for receiving source data to be compressed, the data representing a plurality of elements of an array;
b) filtering means, coupled to the input, for down filtering the source data to obtain low resolution data (41) and generating from the low resolution data at least two sets of reduced size low resolution data (A', B'), the individual elements of each set of reduced size low resolution data (A', B') being representative of a plurality of elements of the source data;
c) modulation generation means, coupled to the input, for generating modulation data specifying how to combine low frequency data (A,B) obtained by upscaling the sets of reduced size low resolution data (A', B') to generate an approximation to the source data; and
d) an output, coupled to the filtering means and to the modulation generation means, for outputting the sets of reduced size low resolution data (A', B') and modulation data as compressed data.

**37.** Apparatus according to claim 36, further comprising a store, coupled to the modulation generation means and to the filtering means, for storing as compressed data the sets of reduced size low resolution data (A', B') and the modulation data and wherein the output may be coupled directly to the store for outputting the compressed data.

**38.** Apparatus according to either claim 36 or 37 wherein the filtering means is further configured to:

a) upscale the low resolution data (41) to form first level low frequency data (42) approximating the source data and having the same number of elements as the source data;
b) generate difference data (43) from the source data (40) and the first level low frequency data (42);
c) use the first level low frequency data (42) and the difference data (43) to generate at least two sets of second level low frequency data (A, B); and
d) reduce the size of each set of second level low frequency data (A, B) by down filtering to generate the sets of reduced size low resolution data (A',B').

**39.** Apparatus according to any one of claims 36 to 38 further comprising optimisation means, coupled to the modulation generation means and to the filtering means, for iteratively improving the sets of reduced size low resolution data and the modulation data.

**40.** Apparatus for decompressing compressed image, texture or sound source data, the compressed source data comprising at least two sets of reduced size low resolution data (A', B') and modulation data defining how sets of low frequency data (A,B) obtained by upscaling the sets of reduced size low resolution data (A',B') should be combined to generate an approximation to the uncompressed source data, the apparatus comprising:

a) an input for receiving compressed source data;
b) interpolation means, coupled to the input, for interpolating each set of reduced size low resolution data (A', B') to generate at least two sets of low frequency data (A, B) representing first approximations to each element of the uncompressed, source data;
c) segmenting means, coupled to the input, for segmenting an element of modulation data into a plurality of modulation values;
d) weighting means, coupled to the interpolation means and to the segmenting means, for weighting corresponding elements of each set of low frequency data (A, B) using the relevant modulation value; and
e) a combiner, coupled to the weighting means, for combining the corresponding weighted low frequency data (A, B) to generate a second approximation to the uncompressed source data.

**41.** Apparatus for decompressing compressed image or texture data according to claim 40, configured to decompress four elements of reduced size low resolution data simultaneously.

**42.** A method according to claim 15, wherein the sets of second level low frequency data are improved during each iteration by selecting windows of the current modulation data and corresponding source data, computing the linear system or equations for localised sets of second level low frequecny data, and solving for the set of second level low frequency data which produces the least squared error using singular value decomposition.

**43.** A method of decompressing compressed image or texture data according to any of claims 26 to 28, wherein an element of the sets of reduced size low resolution data and an element of the modulation data correspond to 32 elements of the source image or texture data.

44. A method according to claim 43, wherein an element of the sets of reduced size low resolution data and an element of the modulation data correspond to a block of elements of the source data arranged in a four element by eight element array.


**Patentansprüche**

1. Verfahren zum Komprimieren von Bild-, Textur- oder Tonquelldaten, wobei die komprimierten Daten mehrere Elemente eines Quelldatenfeldes repräsentieren, wobei das Verfahren die folgenden Schritte beinhaltet:

   a) Herabfiltern der Quelldaten zum Erhalten von Niederauflösungsdaten (41) und Erzeugen von wenigstens zwei Sätzen von Niederauflösungsdaten (A', B') reduzierter Größe von den Niederauflösungsdaten, wobei die individuellen Elemente jedes Satzes von Niederauflösungsdaten (A', B') reduzierter Größe für mehrere Elemente der Quelldaten repräsentativ sind;
   b) Verwenden der Quelldaten zum Erzeugen von Modulationsdaten (52), wobei jedes Element der Modulationsdaten vorgibt, wie Niederfrequenzdaten (A', B') zu kombinieren sind, die durch Hinaufskalieren der Sätze von Niederauflösungsdaten (A', B') reduzierter Größe erhalten wurden, um eine Approximation an die Quelldaten zu erzeugen; und
   c) Speichern der wenigstens zwei Sätze von Niederauflösungsdaten (A', B') reduzierter Größe und Modulationsdaten als komprimierte Daten.

2. Verfahren nach Anspruch 1, wobei der Schritt des Erzeugens der Sätze von Niederauflösungsdaten (A', B') reduzierter Größe ferner die folgenden Schritte beinhaltet:

   a) Hinaufskalieren der Niederauflösungsdaten (41), um Niederfrequenzdaten (42) erster Ebene zu erzeugen, die die Quelldaten approximieren und dieselbe Anzahl von Elementen haben wie die Quelldaten;
   b) Erzeugen von Differenzdaten (43) von den Quelldaten und den Niederfrequenzdaten (42) erster Ebene;
   c) Verwenden der Niederfrequenzdaten (42) erster Ebene und der Differenzdaten (43) zum Erzeugen von wenigstens zwei Sätzen von Niederfrequenzdaten (50, 51) zweiter Ebene; und
   d) Reduzieren der Größe jedes Satzes von Niederfrequenzdaten zweiter Ebene durch Herabfiltern zum Erzeugen der Sätze von Niederauflösungsdaten (A', B') reduzierter Größe.

3. Verfahren nach Anspruch 2, wobei der Schritt des Erzeugens der Modulationsdaten (52) ferner das Verwenden der Quelldaten und der Sätze von Niederfrequenzdaten (50, 51) zweiter Ebene zum Erzeugen mehrerer Modulationswerte beinhaltet, wobei jeder Modulationswert für jedes Element der Quelldaten repräsentiert, wie die Sätze von Niederfrequenzdaten (50, 51) zweiter Ebene zu kombinieren sind, um die Quelldaten zu approximieren, wobei jeder Modulationswert als ein Element der Modulationsdaten gespeichert wird.

4. Verfahren nach Anspruch 2, wobei der Schritt des Erzeugens der Modulationsdaten (52) ferner die folgenden Schritte beinhaltet:

   a) Verwenden der Quelldaten und der Sätze von Niederfrequenzdaten (50, 51) zweiter Ebene zum Erzeugen mehrerer Modulationswerte, wobei jeder Modulationswert für jedes Element der Quelldaten repräsentiert, wie die Sätze von Niederfrequenzdaten (50, 51) zweiter Ebene zu kombinieren sind, um die Quelldaten zu approximieren; und
   b) Erzeugen von Modulationsdaten mit derselben Anzahl von Elementen wie die Daten reduzierter Größe, wobei jedes Element der Modulationsdaten für mehrere Modulationswerte repräsentativ ist.

5. Verfahren nach Anspruch 4, wobei jeder Modulationswert in 2 Bits gespeichert wird.

6. Verfahren nach Anspruch 4, wobei jeder zweite Modulationswert gespeichert wird, jeder gespeicherte Modulationswert 2 Bits einnimmt und die übrigen Modulationswerte implizit durch den Durchschnitt der gespeicherten Nachbarmodulationswerte repräsentiert werden.

7. Verfahren nach Anspruch 4, wobei jeder Modulationswert in 1 Bit gespeichert wird.

**8.** Verfahren nach einem der vorherigen Ansprüche, wobei nur zwei Sätze von Daten reduzierter Größe erzeugt werden.

**9.** Verfahren nach einem der Ansprüche 2 bis 7, wobei die Quelldaten Bild- oder Texturdaten sind und das ferner das Berechnen von Hauptachsendaten beinhaltet, die die Richtung maximaler Komponenten der Differenzdaten repräsentieren.

**10.** Verfahren nach Anspruch 9, wobei das Berechnen der Hauptachsendaten ferner die folgenden Schritte beinhaltet:

a) Annehmen, dass der Durchschnitt jedes Elements der Differenzdaten null ist, und Bestimmen der Kovarianzmatrix der Differenzdaten;
b) Ermitteln des Haupteigenvektors der Kovarianzmatrix; und
c) Benutzen des Haupteigenvektors zum Finden der Hauptachsendaten der Differenzdaten.

**11.** Verfahren nach Anspruch 9 oder 10, das ferner das Berechnen von gefilterten Achsendaten mit den folgenden Schritten beinhaltet:

a) Berechnen des Punktprodukts jedes Elements der Differenzdaten mit den Hauptachsendaten;
b) Erzeugen von ausgerichteten Differenzdaten durch Negieren des Elements der Differenzdaten, wenn Schritt (a) ein negatives skalares Ergebnis erzeugt;
c) Unterteilen der ausgerichteten Differenzdaten in überlappende Blöcke von Elementen;
d) Berechnen der Haupteigenvektoren von der Kovarianzmatrix jedes Blocks;
e) Zusammensetzen der resultierenden Haupteigenvektoren zum Bilden von Niederfrequenzdaten dritter Ebene; und
f) Skalieren der Niederfrequenzdaten dritter Ebene zum Erzeugen von gefilterten Achsendaten.

**12.** Verfahren nach Anspruch 11, wobei der zweite Satz von Niederfrequenzdaten zweiter Ebene im Wesentlichen derselbe ist wie die Niederfrequenzdaten erster Ebene und der zweite Satz von Niederfrequenzdaten zweiter Ebene durch Subtrahieren der Differenzdaten von den Niederfrequenzdaten erster Ebene berechnet wird, und das ferner die folgenden Schritte beinhaltet:

a) Berechnen des Punktprodukts jedes Elements der Differenzdaten mit dem entsprechenden Element der gefilterten Achsendaten; und
b) Vertauschen, wo das in Schritt (a) berechnete Punktprodukt negativ ist, der Werte von entsprechenden Elementen im ersten Satz von Niederfrequenzdaten zweiter Ebene und im zweiten Satz von Niederfrequenzdaten zweiter Ebene.

**13.** Verfahren nach Anspruch 2, wobei der Schritt des Erzeugens der Modulationsdaten das Schätzen des Modulationswertes m für jedes Datenelement mit der folgenden Funktion beinhaltet:

$$m = \frac{(\overline{O}-\overline{A})(\overline{B}-\overline{A})}{(\overline{B}-\overline{A})(\overline{B}-\overline{A})}$$

wobei
$\overline{O}$ das Element der ursprünglichen Daten ist,
$\overline{A}$ das entsprechende Element des ersten Satzes von Niederfrequenzdaten zweiter Ebene ist, und
B das entsprechende Element des zweiten Satzes von Niederfrequenzdaten zweiter Ebene ist.

**14.** Verfahren nach Anspruch 2, das ferner das Gruppieren von Modulationswerten in überlappenden lokalen Regionen in wenigstens zwei Sätze mit Hilfe der gruppierten Modulationswerte, um die Sätze von Niederfrequenzdaten zweiter Ebene zu verbessern, und das Berechnen neuer Modulationsdaten von den verbesserten Sätzen von Niederfrequenzdaten zweiter Ebene beinhaltet.

**15.** Verfahren nach Anspruch 14, wobei optimierte Sätze von Niederfrequenzdaten zweiter Ebene und Modulationsdaten durch iteratives Verbessern der Daten erzeugt werden.

**16.** Verfahren nach einem der vorherigen Ansprüche, wobei Schritt (a) von Anspruch 1 das Anwenden einer Wavelet-Transformation auf die ursprünglichen Daten, das Verwerfen von Hochfrequenzinformationen und das Behalten von Niederfrequenzinformationen in den Daten reduzierter Größe beinhaltet.

17. Verfahren nach Anspruch 16, wobei die Wavelet-Transformation eine modifizierte lineare Wavelet-Transformation ist.

18. Verfahren nach Anspruch 2, wobei die Quelldaten Bild- oder Texturdaten sind und der Schritt des Hinaufskalierens der Niederauflösungsdaten durch bilineare Expansion erfolgt.

19. Verfahren nach einem der vorherigen Ansprüche, wobei die Sätze von Daten reduzierter Größe vor dem Speichern quantisiert werden.

20. Verfahren nach Anspruch 19, wobei ein Satz von Daten reduzierter Größe quantisiert wird, um eine Speicherung in 16 Bits zuzulassen, und ein anderer Satz von Daten reduzierter Größe quantisiert wird, um eine Speicherung in 15 Bits zuzulassen.

21. Verfahren nach Anspruch 20, wobei die Quelldaten Bild- oder Texturdaten sind und jedes Element jedes Satzes von Daten reduzierter Größe Rot-, Grün-, Blau- und Alpha-Komponentendaten beinhaltet, wobei die jeweiligen Größen der Komponentendaten anhand dessen ermittelt werden, ob das Element transluszent oder opak ist.

22. Verfahren nach Anspruch 21, wobei die Komponentendaten für opake Elemente als ein Ein-Bit-Opak-Flag gespeichert werden, eine Fünf-Bit-Rotkomponente, eine Fünf-Bit-Grünkomponente und die Blaukomponente in fünf Bits für einen Satz von Daten reduzierter Größe und vier Bits für einen anderen Satz von Daten reduzierter Größe gespeichert werden.

23. Verfahren nach Anspruch 21, wobei die Komponentendaten für transluszente Elemente als ein Ein-Bit-Opak-Flag Drei-Bit-Alphakomponente gespeichert werden [sic], Vier-Bit-Rotkomponente, Vier-Bit-Grünkomponente und die Blaukomponente in vier Bits für einen Satz von Daten reduzierter Größe und drei Bits für einen anderen Satz von Daten reduzierter Größe gespeichert werden.

24. Verfahren nach einem der vorherigen Ansprüche, wobei die Quelldaten Bild- oder Texturdaten sind und jedes Element jedes Satzes von Daten reduzierter Größe für einen Block von Elementen der ursprünglichen Daten von vier mal vier Elementen repräsentativ sind.

25. Verfahren nach Anspruch 24, wobei vier Elemente der Sätze von Daten reduzierter Größe benötigt werden, um auf ein einziges Element von Vollgrößendaten Textur anzuwenden.

26. Verfahren zum Dekomprimieren von komprimierten Bild-, Textur- oder Tonquelldaten, wobei die komprimierten Daten wenigstens zwei Sätze von Daten (A', B') reduzierter Größe und Modulationsdaten beinhalten, die definieren, wie hinaufskalierte Daten (A, B) von den Sätzen von Daten (A', B') reduzierter Größe zu kombinieren sind, um eine Approximation an die Quelldaten zu erzeugen, wobei das Verfahren die folgenden Schritte beinhaltet:

a) Identifizieren, für jeden Satz von N Elementen der Quelldaten, wenigstens eines entsprechenden Elementes in jedem Satz von Daten reduzierter Größe;
b) Verwenden der entsprechenden Elemente von Daten reduzierter Größe zum Hinaufskalieren jedes Satzes von Daten reduzierter Größe, um einen Satz von Niederfrequenzdaten mit N Elementen zu erzeugen;
c) Identifizieren des entsprechenden Elements der Modulationsdaten und Trennen des Elements der Modulationsdaten in N Modulationswerte;
d) Gewichten entsprechender Elemente jedes Satzes von Niederfrequenzdaten mit N Elementen mit Hilfe des relevanten Modulationswertes, um Sätze von gewichteten Niederfrequenzdaten mit N Elementen zu bilden;
e) Kombinieren der entsprechenden Elemente der Sätze von gewichteten Niederfrequenzdaten mit N Elementen, um eine Approximation an den N-Elemente-Teil der Quelldaten zu erzeugen.

27. Verfahren nach Anspruch 26, wobei die Schritte (a), (b), (c) und (d) an jedem Element jedes Satzes von Daten reduzierter Größe und an jedem Element der Modulationsdaten durchgeführt werden, um eine Approximation an die gesamten Quelldaten zu erzeugen.

28. Verfahren nach Anspruch 26, wobei die Schritte (a), (b), (c) und (d) an einem Block von P Elementen jedes Satzes von Daten reduzierter Größe und an einem Block der entsprechenden P Elemente der Modulationsdaten durchgeführt werden, um eine Approximation an einen Block von PxN Elementen der Quelldaten zu erzeugen.

29. Verfahren nach einem der Ansprüche 26 bis 28, wobei ein Element der Sätze von Daten reduzierter Größe und ein Element der Modulationsdaten 16 Elementen der Quelldaten entsprechen.

30. Verfahren nach Anspruch 29, wobei die Quelldaten Bild- oder Texturdaten sind und ein Element der Sätze von Daten reduzierter Größe und ein Element der Modulationsdaten einem Quelldaten-Elementeblock entsprechen, der zu einem Feld von vier mal vier Elementen angeordnet ist.

31. Verfahren nach Anspruch 28, wobei die Quelldaten Bild- oder Texturdaten sind und P 4 und N 16 ist, die Elemente der Quelldaten durch Verarbeiten von vier Elementen der Sätze von Daten reduzierter Größe und Modulationsdaten geschätzt werden, jedes Element der Sätze von Daten reduzierter Größe und Modulationsdaten einem Block von 4x4 Elementen von Quelldaten entspricht, wobei die 4x4 Blöcke zu einem nicht überlappenden 2x2 Feld angeordnet sind.

32. Verfahren nach Anspruch 26, wobei die komprimierten Daten Texturdaten sind, jedes Element der komprimierten Texturdaten einen Block von 4x4 Elementen der ursprünglichen Texturdaten repräsentiert, die komprimierten Daten ferner Modulationsflagdaten umfassen, jedes Element jedes Satzes von Daten reduzierter Größe einen blockrepräsentativen Wert des Wertes des entsprechenden Blocks von 4x4 Elementen der Quelltexturdaten speichert, jedes Element der Modulationsdaten 16 Komponentenmodulationswerte zum Regenerieren von unkomprimierten Texturdaten von den Sätzen von Daten reduzierter Größe umfasst und jedes Element der Modulationsflagdaten die Interpretation der Modulationsdaten modifiziert, wobei:

    Schritt (a) ferner das Identifizieren eines Blocks von 2x2 Elementen von Vollgrößendaten beinhaltet, die zum Texturieren eines Elements eines Objekts benötigt werden;
    Schritte (b) und (c) ferner das Identifizieren von vier Elementen jedes Satzes von Daten reduzierter Größe, Modulationsdaten und Modulationsflagdaten beinhalten, die zum Erzeugen der 2x2 Elemente der Vollgrößendaten benötigt werden; und
    Schritte (d) und (e) die vier identifizierten Elemente gleichzeitig dekomprimieren, um die benötigten 2x2 Elemente von Quelltexturdaten zu erzeugen.

33. Verfahren nach Anspruch 32, wobei das Dekomprimieren der vier identifizierten Elemente ferner Folgendes beinhaltet:

    a) Abbilden des Ortes jedes Elements des 2x2 Blocks von Texturdaten, um zu ermitteln, ob das Element am blockrepräsentativen Element eines 4x4 Blocks liegt;
    b) Kombinieren, für jedes Element des 2x2 Blocks von Texturdaten, das an einem anderen Ort als einem blockrepräsentativen Element liegt, des repräsentativen Wertes des 4x4 Blocks mit wenigstens einem der repräsentativen Werte der benachbarten 4x4 Blöcke, um einen modifizierten repräsentativen Wert zu erzeugen;
    c) Setzen, für jedes Element des 2x2 Blocks von Texturdaten, das in dem blockrepräsentativen Element eines Blocks liegt, des modifizierten repräsentativen Wertes auf den repräsentativen Wert des Blocks;
    d) Kombinieren der modifizierten repräsentativen Werte mit den Modulationsdaten, um 2x2 Texturdaten zu erzeugen.

34. Verfahren nach Anspruch 32, wobei der Schritt des Dekomprimierens der vier identifizierten Elemente ferner die folgenden Schritte beinhaltet:

    a) Trennen von vier relevanten Komponentenmodulationswerten von den identifizierten Modulationsdatenelementen;
    b) Kombinieren der vier relevanten Komponentenwerte für jedes identifizierte Modulationsdatenelement mit dem entsprechenden Element der Modulationsflagdaten, um vier Sätze von Modulationsdecodierdaten zu bilden; und
    c) Anwenden jedes Satzes von Modulationsdecodierdaten auf das relevante Element der identifizierten Daten reduzierter Größe, um die benötigten 2x2 Elemente von Quelltexturdaten zu erzeugen.

35. Verfahren nach einem der Ansprüche 26 bis 34, wobei die dekomprimierten Daten auf Textur eines Objekts angewandte dekomprimierte Texturdaten sind.

36. Vorrichtung zum Komprimieren von Bild-, Textur- oder Tonquelldaten, wobei die Vorrichtung Folgendes umfasst:

a) einen Eingang zum Empfangen von zu komprimierenden Quelldaten, wobei die Daten mehrere Elemente eines Feldes repräsentieren;

b) mit dem Eingang gekoppelte Filtermittel zum Herabfiltern der Quelldaten, um Niederauflösungsdaten (41) zu erhalten, und zum Erzeugen von wenigstens zwei Sätzen von Niederauflösungsdaten (A', B') reduzierter Größe von den Niederauflösungsdaten, wobei die individuellen Elemente jedes Satzes von Niederauflösungsdaten (A', B') reduzierter Größe für mehrere Elemente der Quelldaten repräsentativ sind;

c) mit dem Eingang gekoppelte Modulationserzeugungsmittel zum Erzeugen von Modulationsdaten, die vorgeben, wie Niederfrequenzdaten (A, B) zu kombinieren sind, die durch Hinaufskalieren der Sätze von Niederauflösungsdaten (A', B') reduzierter Größe erhalten wurden, um eine Approximation an die Quelldaten zu erzeugen; und

d) einen mit dem Filtermittel und dem Modulationserzeugungsmittel gekoppelten Ausgang zum Ausgeben der Sätze von Niederauflösungsdaten (A', B') reduzierter Größe und Modulationsdaten als komprimierte Daten.

37. Vorrichtung nach Anspruch 36, die ferner einen mit dem Modulationserzeugungsmittel und dem Filtermittel gekoppelten Speicher zum Speichern der Sätze von Niederauflösungsdaten (A', B') reduzierter Größe und der Modulationsdaten als komprimierte Daten umfasst, und wobei der Ausgang direkt mit dem Speicher gekoppelt werden kann, um die komprimierten Daten auszugeben.

38. Vorrichtung nach Anspruch 36 oder 37, wobei das Filtermittel ferner konfiguriert ist zum:

a) Hinaufskalieren der Niederauflösungsdaten (41) zum Bilden von Niederfrequenzdaten (42) erster Ebene, die die Quelldaten approximieren und die dieselbe Anzahl von Elementen haben wie die Quelldaten;

b) Erzeugen von Differenzdaten (43) von den Quelldaten (40) und den Niederfrequenzdaten (42) erster Ebene;

c) Verwenden der Niederfrequenzdaten (42) erster Ebene und der Differenzdaten (43) zum Erzeugen von wenigstens zwei Sätzen von Niederfrequenzdaten (A, B) zweiter Ebene; und

d) Reduzieren der Größe jedes Satzes von Niederfrequenzdaten (A, B) zweiter Ebene durch Herabfiltern zum Erzeugen der Sätze von Niederauflösungsdaten (A', B') reduzierter Größe.

39. Vorrichtung nach einem der Ansprüche 36 bis 38, die ferner mit dem Modulationserzeugungsmittel und dem Filtermittel gekoppelte Optimierungsmittel zum iterativen Verbessern der Sätze von Niederauflösungsdaten reduzierter Größe und die Modulationsdaten umfasst.

40. Vorrichtung zum Dekomprimieren von komprimierten Bild-, Textur- oder Tonquelldaten, wobei die komprimierten Quelldaten wenigstens zwei Sätze von Niederauflösungsdaten (A', B') reduzierter Größe und Modulationsdaten beinhalten, die definieren, wie durch Hinaufskalieren der Sätze von Niederauflösungsdaten (A', B') reduzierter Größe erhaltene Sätze von Niederfrequenzdaten (A, B) zu kombinieren sind, um eine Approximation an die unkomprimierten Quelldaten zu erzeugen, wobei die Vorrichtung Folgendes umfasst:

a) einen Eingang zum Empfangen von komprimierten Quelldaten;

b) mit dem Eingang gekoppelte Interpolationsmittel zum Interpolieren jedes Satzes von Niederauflösungsdaten (A', B') reduzierter Größe, um wenigstens zwei Sätze von Niederfrequenzdaten (A, B) zu erzeugen, die erste Approximationen an jedes Element der unkomprimierten Quelldaten repräsentieren;

c) mit dem Eingang gekoppelte Segmentierungsmittel zum Segmentieren eines Elementes von Modulationsdaten in mehrere Modulationswerte;

d) mit dem Interpolationsmittel und dem Segmentierungsmittel gekoppelte Gewichtungsmittel zum Gewichten von entsprechenden Elementen jedes Satzes von Niederfrequenzdaten (A, B) mit Hilfe des relevanten Modulationswertes; und

e) einen mit dem Gewichtungsmittel gekoppelten Kombinator zum Kombinieren der entsprechenden gewichteten Niederfrequenzdaten (A, B) zum Erzeugen einer zweiten Approximation an die unkomprimierten Quelldaten.

41. Vorrichtung zum Dekomprimieren von komprimierten Bild- oder Texturdaten nach Anspruch 40, die zum gleichzeitigen Dekomprimieren von vier Elementen von Niederauflösungsdaten reduzierter Größe konfiguriert ist.

42. Verfahren nach Anspruch 15, wobei die Sätze von Niederfrequenzdaten zweiter Ebene bei jeder Iteration durch Wählen von Fenstern der aktuellen Modulationsdaten und entsprechenden Quelldaten, Berechnen des linearen Systems oder von Gleichungen für lokalisierte Sätze von Niederfrequenzdaten zweiter Ebene und Auflösen für den Satz von Niederfrequenzdaten zweiter Ebene, der das kleinste Fehlerquadrat ergibt, mittels Singulärwertzerlegung verbessert werden.

**43.** Verfahren zum Dekomprimieren von komprimierten Bild- oder Texturdaten nach einem der Ansprüche 26 bis 28, wobei ein Element der Sätze von Niederauflösungsdaten reduzierter Größe und ein Element der Modulationsdaten 32 Elementen der Quellbild- oder -texturdaten entsprechen.

**44.** Verfahren nach Anspruch 43, wobei ein Element der Sätze von Niederauflösungsdaten reduzierter Größe und ein Element der Modulationsdaten einem Block von Elementen der Quelldaten entsprechen, die zu einem Feld von vier mal acht Elementen angeordnet sind.

## Revendications

**1.** Procédé de compression de données source d'image, de texture ou de son, les données compressées représentant une pluralité d'éléments de grille de données source, le procédé comprenant les étapes consistant en :

a) filtrage réducteur des données source pour obtenir des données de faible résolution (41) et génération d'au moins deux ensembles de données de faible résolution de taille réduite (A', B') à partir des données de faible résolution, les éléments individuels de chaque ensemble de données de faible résolution de taille réduite (A', B') étant représentatifs d'une pluralité d'éléments des données source;
b) utilisation des données sources pour générer des données de modulation (52), chaque élément des données de modulation spécifiant comment combiner les données de basse fréquence (A, B) obtenues par la mise à une échelle supérieure des ensembles de données de faible résolution de taille réduite (A', B') afin de générer une approximation des données source; et
c) stockage des au moins deux ensembles de données de faible résolution de taille réduite (A', B') et des données de modulation sous forme de données compressées.

**2.** Procédé selon la revendication 1, dans lequel l'étape de génération des ensembles de données de faible résolution de taille réduite (A', B') comprend en plus les étapes consistant en :

a) mise à une échelle supérieure des données de faible résolution (41) pour produire des données de basse fréquence d'un premier niveau (42) approchant des données source et ayant le même nombre d'éléments que les données source;
b) génération de données de différence (43) à partir des données source et des données de basse fréquence de premier niveau (42);
c) utilisation des données de basse fréquence de premier niveau (42) et des données de différence (43) pour générer au moins deux ensembles de données de basse fréquence d'un deuxième niveau (50, 51); et
d) réduction de la taille de chaque ensemble de données de basse fréquence de deuxième niveau par filtrage réducteur pour produire les ensembles de données de faible résolution de taille réduite (A', B').

**3.** Procédé selon la revendication 2, dans lequel l'étape de génération des données de modulation (52) comprend en plus utiliser les données source et les ensembles de données de basse fréquence de deuxième niveau (50, 51) pour générer une pluralité de valeurs de modulation, chaque valeur de modulation représentant, pour chaque élément des données source, comment les ensembles de données de basse fréquence de deuxième niveau (50, 51) devraient être combinés pour approcher les données source, chaque valeur de modulation étant stockée sous forme d'un élément des données de modulation.

**4.** Procédé selon la revendication 2, dans lequel l'étape de génération des données de modulation (52) comprend en plus les étapes consistant à :

(a) utiliser les données source et les ensembles de données de basse fréquence de deuxième niveau (50, 51) pour générer une pluralité de valeurs de modulation, chaque valeur de modulation représentant, pour chaque élément des données source, comment les ensembles de données de basse fréquence de deuxième niveau (50, 51) devraient être combinés pour approcher les données source; et
(b) générer des données de modulation ayant le même nombre d'éléments que les données de taille réduite, chaque élément des données de modulation étant représentatif d'une pluralité de valeurs de modulation.

**5.** Procédé selon la revendication 4, dans lequel chaque valeur de modulation est stockée dans 2 bits.

**6.** Procédé selon la revendication 4, dans lequel une valeur de modulation sur deux est stockée, chaque valeur de modulation stockée occupant 2 bits et les valeurs de modulation restantes sont représentées implicitement par la moyenne des valeurs de modulation stockées voisines.

**7.** Procédé selon la revendication 4, dans lequel chaque valeur de modulation est stockée dans 1 bit.

**8.** Procédé selon l'une quelconque des revendications précédentes, dans lequel seulement deux ensembles de données de taille réduite sont générés.

**9.** Procédé selon l'une quelconque des revendications 2 à 7, dans lequel les données source sont des données d'image ou de texture et comprenant en plus calculer des données d'axe principal représentant la direction des composants maximaux des données de différence.

**10.** Procédé selon la revendication 9, dans lequel calculer les données d'axe principal comprend en plus les étapes consistant à :

a) supposer que la moyenne de chaque élément des données de différence est zéro et déterminer la matrice de covariance des données de différence;
b) déterminer le vecteur propre principal de la matrice de covariance; et
c) utiliser le vecteur propre principal pour localiser les données d'axe principal des données de différence.

**11.** Procédé selon la revendication 9 ou 10, comprenant en plus calculer des données d'axe filtrées par les étapes suivantes :

a) calculer le produit scalaire de chaque élément des données de différence avec les données d'axe principal;
b) produire des données de différence alignées en effectuant une opération de négation sur l'élément des données de différence si l'étape (a) donne un résultat scalaire négatif;
c) diviser les données de différence alignées en des blocs chevauchés d'éléments;
d) calculer les vecteurs propres principaux à partir de la matrice de covariance de chaque bloc;
e) assembler les vecteurs propres principaux résultants pour former des données de basse fréquence d'un troisième niveau; et
f) mettre à l'échelle les données de basse fréquence de troisième niveau pour générer des données d'axe filtrées.

**12.** Procédé selon la revendication 11, dans lequel le deuxième ensemble de données de basse fréquence de deuxième niveau est sensiblement le même que les données de basse fréquence de premier niveau et le premier ensemble de données de basse fréquence de deuxième niveau est calculé en soustrayant les données de différence des données de basse fréquence de premier niveau et comprenant en plus les étapes consistant à :

a) calculer le produit scalaire de chaque élément des données de différence avec l'élément correspondant des données d'axe filtrées; et
b) lorsque le produit scalaire calculé à l'étape (a) est négatif, échanger les valeurs d'éléments correspondants dans le premier ensemble de données de basse fréquence de deuxième niveau et dans le deuxième ensemble de données de basse fréquence de deuxième niveau.

**13.** Procédé selon la revendication 2, dans lequel l'étape de génération des données de modulation comprend estimer la valeur de modulation, m, pour chaque élément de données en utilisant la fonction :

$$m = \frac{\left(\overline{O} - \overline{A}\right)\left(\overline{B} - \overline{A}\right)}{\left(\overline{B} - \overline{A}\right)\left(\overline{B} - \overline{A}\right)}$$

où
O est l'élément des données originales,
A est l'élément correspondant du premier ensemble de données de basse fréquence de deuxième niveau et

*B* est l'élément correspondant du deuxième ensemble de données de basse fréquence de deuxième niveau.

14. Procédé selon la revendication 2, comprenant en plus grouper les valeurs de modulation dans des régions locales chevauchées, en au moins deux ensembles, en utilisant les valeurs de modulation groupées pour améliorer les ensembles de données de basse fréquence de deuxième niveau et calculer de nouvelles données de modulation à partir des ensembles améliorés de données de basse fréquence de deuxième niveau.

15. Procédé selon la revendication 14, dans lequel des ensembles optimisés de données de basse fréquence de deuxième niveau et de données de modulation, sont produits en améliorant itérativement les données.

16. Procédé selon l'une quelconque des revendications précédentes, dans lequel l'étape (a) selon la revendication 1, comprend appliquer une transformée en ondelettes aux données originales, jeter les informations de haute fréquence et conserver les informations de basse fréquence dans les données de taille réduite.

17. Procédé selon la revendication 16, dans lequel la transformée en ondelettes est une transformée en ondelettes linéaire modifiée.

18. Procédé selon la revendication 2, dans lequel les données source sont des données d'image ou de texture et l'étape de mise à une échelle supérieure des données de faible résolution est effectuée par extension bilinéaire.

19. Procédé selon l'une quelconque des revendications précédentes, dans lequel les ensembles de données de taille réduite sont quantifiés avant d'être stockés.

20. Procédé selon la revendication 19, dans lequel un ensemble de données de taille réduite est quantifié pour permettre le stockage dans 16 bits et un autre ensemble de données de taille réduite est quantifié pour permettre le stockage dans 15 bits.

21. Procédé selon la revendication 20, dans lequel les données source sont des données d'image ou de texture et chaque élément de chaque ensemble de données de taille réduite comprend des données de composants rouge, vert, bleu et alpha, les tailles respectives des données de composants étant déterminées selon que l'élément est translucide ou opaque.

22. Procédé selon la revendication 21, dans lequel pour les éléments opaques, les données de composants sont stockées sous forme de drapeau opaque d'un bit, un composant rouge de cinq bits, un composant vert de cinq bits et le composant bleu est stocké dans cinq bits pour un ensemble de données de taille réduite et dans quatre bits pour un autre ensemble de données de taille réduite.

23. Procédé selon la revendication 21, dans lequel pour les éléments translucides, les données de composants sont stockées sous forme de drapeau opaque d'un bit, un composant alpha de 3 bits, un composant rouge de quatre bits, un composant vert de quatre bits et le composant bleu est stocké dans quatre bits pour un ensemble de données de taille réduite et dans trois bits pour un autre ensemble de données de taille réduite.

24. Procédé selon l'une quelconque des revendications précédentes, dans lequel les données source sont des données d'image ou de texture et chaque élément de chaque ensemble de données de taille réduite est représentatif d'un bloc d'éléments des données originales mesurant quatre éléments sur quatre éléments.

25. Procédé selon la revendication 24, dans lequel quatre éléments des ensembles de données de taille réduite sont requis pour appliquer une texture à un seul élément de données de taille normale.

26. Procédé de décompression de données source d'image, de texture ou de son compressées, les données compressées comprenant au moins deux ensembles de données de taille réduite (A', B') et des données de modulation définissant comment des données mises à une échelle supérieure (A, B) des ensembles de données de taille réduite (A', B'), devraient être combinées pour générer une approximation des données source, le procédé comprenant les étapes consistant à :

    a) identifier pour chaque ensemble de N éléments des données source, au moins un élément correspondant dans chaque ensemble de données de taille réduite;
    b) utiliser les éléments correspondants des données de taille réduite pour mettre à une échelle supérieure chaque ensemble de données de taille réduite afin de produire un ensemble de données de basse fréquence de N éléments;

c) identifier l'élément correspondant des données de modulation et séparer l'élément des données de modulation en N valeurs de modulation;

d) pondérer les éléments correspondants de chaque ensemble de données de basse fréquence de N éléments en utilisant la valeur de modulation pertinente pour former des ensembles de données de basse fréquence pondérées de N éléments;

e) combiner les éléments correspondants des ensembles de données de basse fréquence pondérées de N éléments pour générer une approximation de la portion de N éléments des données source.

**27.** Procédé selon la revendication 26, dans lequel les étapes (a), (b), (c) et (d) sont effectuées sur chaque élément de chaque ensemble de données de taille réduite et sur chaque élément des données de modulation pour générer une approximation des données source entières.

**28.** Procédé selon la revendication 26, dans lequel les étapes (a), (b), (c) et (d) sont effectuées sur un bloc de P éléments de chaque ensemble de données de taille réduite et sur un bloc des P éléments correspondants des données de modulation pour générer une approximation d'un bloc de PxN éléments des données source.

**29.** Procédé selon l'une quelconque des revendications 26 à 28, dans lequel un élément des ensembles de données de taille réduite et un élément des données de modulation correspondent à 16 éléments des données source.

**30.** Procédé selon la revendication 29, dans lequel les données source sont des données d'image ou de texture et un élément des ensembles de données de taille réduite et un élément des données de modulation correspondent à un bloc d'éléments des données source arrangé en une grille de quatre éléments sur quatre.

**31.** Procédé selon la revendication 28, dans lequel les données source sont des données d'image ou de texture et P est 4 et N est 16, les éléments des données source sont estimés en traitant quatre éléments des ensembles de données de taille réduite et des données de modulation, chaque élément des ensembles de données de taille réduite et des données de modulation correspondant à un bloc de 4x4 éléments de données source, les blocs de 4x4 étant arrangés en une grille de 2x2 sans chevauchement.

**32.** Procédé selon la revendication 26, dans lequel les données compressées sont des données de texture, chaque élément des données de texture compressées représente un bloc de 4x4 éléments des données de texture originales, les données compressées comprennent en plus des données indicatrices de modulation, chaque élément de chaque ensemble de données de taille réduite stockant une valeur représentative du bloc de la valeur du bloc correspondant de 4x4 éléments des données source de texture, chaque élément des données de modulation comprenant des valeurs de modulation de 16 composants pour régénérer des données de texture non compressées des ensembles de données de taille réduite et chaque élément des données indicatrices de modulation modifiant l'interprétation des données de modulation, dans lequel :

l'étape (a) comprend en plus identifier un bloc de 2x2 éléments de données de taille normale requis pour texturer un élément d'un objet;

les étapes (b) et (c) comprennent en plus identifier quatre éléments de chaque ensemble de données de taille réduite, des données de modulation et des données indicatrices de modulation qui sont requis pour générer les 2x2 éléments des données de taille normale; et

les étapes (d) et (e) décompressent les quatre éléments identifiés simultanément pour produire les 2x2 éléments requis de données source de texture.

**33.** Procédé selon la revendication 32, dans lequel décompresser les quatre éléments identifiés comprend en plus :

a) mapper l'emplacement de chaque élément du bloc 2x2 de données de texture pour déterminer si l'élément se trouve à l'élément représentatif du bloc d'un bloc 4x4;

b) pour chaque élément du bloc 2x2 de données de texture qui se trouve à un emplacement autre qu'un élément représentatif du bloc, combiner la valeur représentative du bloc 4x4 avec au moins l'une des valeurs représentatives des blocs 4x4 voisins pour générer une valeur représentative modifiée;

c) pour chaque élément du bloc 2x2 de données de texture qui se trouve dans l'élément représentatif de bloc du bloc, mettre la valeur représentative modifiée à la valeur représentative du bloc;

d) combiner les valeurs représentatives modifiées avec les données de modulation pour générer 2x2 données de texture.

**34.** Procédé selon la revendication 32, dans lequel l'étape de décompression des quatre éléments identifiés comprend en plus les étapes consistant à :

a) séparer les valeurs de modulation de quatre composants pertinents des éléments des données de modulation identifiés;

b) combiner les valeurs des quatre composants pertinents pour chaque élément des données de modulation identifié avec l'élément correspondant des données indicatrices de modulation pour former quatre ensembles de données de décodage de modulation; et

c) appliquer chaque ensemble de données de décodage de modulation à l'élément pertinent des données de taille réduite identifiées pour générer les 2x2 éléments requis de données source de texture.

**35.** Procédé selon l'une quelconque des revendications 26 à 34, dans lequel les données décompressées sont des données de texture décompressées appliquées à la texture d'un objet.

**36.** Appareil de compression de données source d'image, de texture ou de son, l'appareil comprenant :

a) une entrée pour recevoir des données source à compresser, les données représentant une pluralité d'éléments d'une grille;

b) un moyen de filtrage, couplé à l'entrée, pour le filtrage réducteur des données source afin d'obtenir des données de faible résolution (41) et de générer au moins deux ensembles de données de faible résolution de taille réduite (A', B') à partir des données de faible résolution, les éléments individuels de chaque ensemble de données de résolution de taille réduite (A', B') étant représentatifs d'une pluralité d'éléments des données source;

c) un moyen de génération de modulation, couplé à l'entrée, pour générer des données de modulation spécifiant comment combiner les données de basse fréquence (A, B), obtenues en mettant à une échelle supérieure les ensembles de données de faible résolution de taille réduite (A', B') afin de générer une approximation des données source;
et

d) une sortie, couplée au moyen de filtrage et au moyen de génération de modulation, pour sortir les ensembles de données de faible résolution de taille réduite (A', B') et les données de modulation sous forme de données compressées.

**37.** Appareil selon la revendication 36, comprenant en plus une mémoire, couplée au moyen de génération de modulation et au moyen de filtrage, pour stocker sous forme de données compressées, les ensembles de données de faible résolution de taille réduite (A', B') et les données de modulation et dans lequel la sortie peut être couplée directement à la mémoire pour sortir les données compressées.

**38.** Appareil selon la revendication 36 ou 37, dans lequel le moyen de filtrage est en plus configuré pour :

a) mettre à une échelle supérieure les données de faible résolution (41) pour former des données de basse fréquence d'un premier niveau (42) approchant les données source et ayant le même nombre d'éléments que les données source;

b) générer des données de différence (43) à partir des données source (40) et des données de basse fréquence du premier niveau (42);

c) utiliser les données de basse fréquence du premier niveau (42) et les données de différence (43) pour générer au moins deux ensembles de données de basse fréquence d'un deuxième niveau (A, B); et

d) réduire la taille de chaque ensemble de données de basse fréquence de deuxième niveau (A, B) par filtrage réducteur pour générer les ensembles de données de faible résolution de taille réduite (A', B').

**39.** Appareil selon l'une quelconque des revendications 36 à 38, comprenant en plus un moyen d'optimisation, couplé au moyen de génération de modulation et au moyen de filtrage, pour améliorer itérativement les ensembles de données de faible résolution de taille réduite et les données de modulation.

**40.** Appareil de décompression de données source d'image, de texture ou de son compressées, les données source compressées comprenant au moins deux ensembles de données de faible résolution de taille réduite (A', B') et des données de modulation définissant comment les ensembles de données de basse fréquence (A, B) obtenus en mettant à une échelle supérieure les ensembles de données de faible résolution de taille réduite (A', B'), devraient être combinés pour générer une approximation des données source non compressées, l'appareil comprenant :

a) une entrée pour recevoir les données source compressées;

b) un moyen d'interpolation, couplé à l'entrée, pour interpoler chaque ensemble de données de faible résolution de taille réduite (A', B') afin de générer au moins deux ensembles de données de basse fréquence (A, B) représentant des premières approximations de chaque élément des données source non compressées.

c) un moyen de segmentation, couplé à l'entrée, pour segmenter un élément des données de modulation en une pluralité de valeurs de modulation;

d) un moyen de pondération, couplé au moyen d'interpolation et au moyen de segmentation, pour pondérer des éléments correspondants de chaque ensemble de données de basse fréquence (A, B) en utilisant la valeur de modulation pertinente; et

e) un combineur, couplé au moyen de pondération, pour combiner les données de basse fréquence pondérées correspondantes (A, B) afin de générer une deuxième approximation des données source non compressées.

41. Appareil de décompression de données d'image ou de texture compressées selon la revendication 40, configuré pour décompresser simultanément quatre éléments des données de faible résolution de taille réduite.

42. Procédé selon la revendication 15, dans lequel les ensembles de données de basse fréquence de deuxième niveau sont améliorés durant chaque itération en sélectionnant des fenêtres des données de modulation courantes et des données source correspondantes, en calculant le système linéaire ou les équations pour des ensembles localisés de données de basse fréquence de deuxième niveau et en résolvant l'ensemble de données de basse fréquence de deuxième niveau qui produit l'erreur du moindre carré en utilisant la décomposition en valeurs singulières.

43. Procédé de décompression de données d'image ou de texture compressées selon l'une quelconque des revendications 26 à 28, dans lequel un élément des ensembles de données de faible résolution de taille réduite et un élément des données de modulation correspondent à 32 éléments des données source d'image ou de texture.

44. Procédé selon la revendication 43, dans lequel un élément des ensembles de données de faible résolution de taille réduite et un élément des données de modulation correspondent à un bloc d'éléments des données source arrangé en une grille de quatre éléments sur huit éléments.

Triangle being
textured during 3D
rendering

Section of texture
being applied

FIG. 1

Worst Case Situation
for Bilinear Filtering

FIG. 2

FIG. 3

41~ Down Filter

40

Source Image

Upscale

42~ Low frequency version

+

43 Delta Signal (Exaggerated for illustrative purposes)

Upscale

Upscale

51

50~ A

B

FIG. 4a

36

FIG. 4b

73a  71  73c   74  73e

70

73f
73f

72

73d

FIG. 4c

Most Sig bits                              Least Sig bits      100

| 16 bits | 15 bits | 1 bit | 32 bits |
|---------|---------|-------|---------|
| Base Colour B | Base Colour A | Mod. Mode | Modulation Data |

101        102       103        104

110

| 1 bit | 5 bits | 5 bits | 4/5 bit | |
|-------|--------|--------|---------|---|
| 1 | R | G | B | Opaque Colour Mode |

112      113       114       115

110

| 1 bit | 3 bits | 4 bits | 4 bits | 3/4 bit | |
|-------|--------|--------|--------|---------|---|
| 1 | A | R | G | B | Translucent Colour Mode |

112    116     117      118      119

FIG. 5

FIG. 6

FIG. 7

FIG. 8

EP 1 461 772 B1

FIG. 9

FIG. 10

205

280                    281                              282

Modulation          Zero Alpha                        Alpha_A          Alpha_B          283
Value               to Zero
(4 bits)            (1 bit)

                                                                        Subtract         284
                                                                        (B-A)

                                                        Multiply        285

                                                        Add             286

                                        Force Zero      287
                                        (AND)

FIG. 11                                 Alpha-Out       288

300

| A | B |
|---|---|
| C | D |

301

| A | A |
|---|---|
| C | C |

302

| B | A |
|---|---|
| D | C |

(a)  (b)  (c)

# FIG. 12

40 — Original Image

42 — LF Image

43 — Delta Image

Compute Axis and Initial A&B Signals — 310

Compute Modulation and Otimise A and B — 311

Compute and Quantise Modulation — 312

Use SVD to Optimise A and B — 313

Compute and Quantise Modulation — 314

Sufficient Iterations? — No / Yes

Final Quantise and 'tweak' of Colours — 316

Compressed Data (Modulation + ABs)

# FIG. 13

43 — Delta Image

Pixel Data

321 — Compute Overall Principal Axis

Alignment Direction

Align Delta Signal Pixels — 322

Aligned Data

Divide into Local Regions — 330

Overlapping 7x7 Blocks

331 — Compute Weighted Axis

Single Value per Block

334 — Assemble into Low Resolution Image

Upscale — 335

Filtered Axis Image

336

332

| 1 / 256 | 2 / 256 | 3 / 256 | 4 / 256 | 3 / 256 | 2 / 256 | 1 / 256 |
|---------|---------|---------|---------|---------|---------|---------|
| 2 / 256 | 4 / 256 | 6 / 256 | 8 / 256 | 6 / 256 |         | 2 / 256 |
| 3 / 256 | 6 / 256 | 9 / 256 | 12 / 256 | Etc.. |        |         |
| 4 / 256 | 8 / 256 | 12 / 256 | 16 / 256 | 12 / 256 |     |         |
| 3 / 256 |         |         | 12 / 256 | 333 |         |         |
| 2 / 256 | Etc.... |         | 8 / 256 |         |         |         |
| 1 / 256 |         |         | 4 / 256 |         |         |         |

# FIG. 14

350                    42                    43                    336

| Iterate Through Each Pixel of Image | Low Frequency Image | Delta Image | Filtered Axis Image |

351 — Compute "Other Colour"

352 — "A":=Other Colour "B":=Original Pixel

Compute Per Pixel Dot Product

361 — Is Dot Product Negative     Yes

362 — Swap A and B

363 — Accumulate A and B Pixels

364 — Filter A and B Signals

# FIG. 15

390
391
392

| Supplied Modulation + Weight Pairs | → | Sort Into Order of Ascending Modulation Value | → | Partition Values Into 2 Sets With Minimum Error |

393

394 — Compute Partition Points For 0,1,3/8ths and 5/8ths Reps

No

395 — Repartition → Sufficient Iterations? 396

Yes → Rescale Initial A and B Values 397

## FIG. 16

433
432

$A_{TL}$  $B_{TL}$  $A_{TR}$  $B_{TR}$  $A_{BL}$  $B_{BL}$  $A_{BR}$  $B_{BR}$

420  421  422  423

431

435  436

121 rows - 1 per pixel

$M_A$

## FIG. 17

451

450

2BPP "pixel block"

## FIG. 18

460

X direction

Y direction

| $T_{00}$ | $T_{01}$ | $T_{02}$ | $T_{03}$ | $T_{04}$ | $T_{05}$ | $T_{06}$ | $T_{07}$ |
| $T_{10}$ | $T_{11}$ | $T_{12}$ | $T_{13}$ | $T_{14}$ | $T_{15}$ | $T_{16}$ | $T_{17}$ |
| $T_{20}$ | $T_{21}$ | $T_{22}$ | $T_{23}$ | $T_{24}$ | $T_{25}$ | $T_{26}$ | $T_{27}$ |
| $T_{30}$ | $T_{31}$ | $T_{32}$ | $T_{33}$ | $T_{34}$ | $T_{35}$ | $T_{36}$ | $T_{37}$ |

Texel
Arragement

1 bit          1 bit   1 bit

462          461

| $T_{37}$ | ....etc.... | $T_{01}$ | $T_{00}$ |

Most sig.     32 bits     Least sig.     104

## FIG. 19

470

X direction

Y direction

| $T_{00}$ | $T_{01}$ | $T_{02}$ | $T_{03}$ | $T_{04}$ | $T_{05}$ | $T_{06}$ | $T_{07}$ |
| $T_{10}$ | $T_{11}$ | $T_{12}$ | $T_{13}$ | $T_{14}$ | $T_{15}$ | $T_{16}$ | $T_{17}$ |
| $T_{20}$ | $T_{21}$ | $T_{22}$ | $T_{23}$ | $T_{24}$ | $T_{25}$ | $T_{26}$ | $T_{27}$ |
| $T_{30}$ | $T_{31}$ | $T_{32}$ | $T_{33}$ | $T_{34}$ | $T_{35}$ | $T_{36}$ | $T_{37}$ |

475

2 bits          2 bits   2 bits

| $T_{37}$ | ....etc.... | $T_{02}$ | $T_{00}$ |     471

Most sig.     32 bits     Least sig.     104

## FIG. 20

Graph of low frequency A and B signals (using cubics rather than linear)
and the resulting modulated output:

Modulation Diagram

FIG. 21a

Actual modulation values:

Mod Vals

FIG. 21b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5956431 A, Iourcha
- US 6313846 B
- EP 98939751 A

**Non-patent literature cited in the description**

- Computer Display of Curved Surfaces. *Proc. IEEE Comp. Graphics, Pattern Recognition and Data Structures,* May 1975
- **KAJIYA ; SUTHERLAND, CHEADLE.** A Random-Access Video Frame Buffer. *Proceedings IEEE Comp. Graphics, Pattern Recognition, & Data Structures,* May 1975
- **P. HECKBERT.** Color Image Quantisation for Frame Buffer Display. *Computer Graphics,* July 1982, vol. 16 (3), 297-307
- **BEERS et al.** Rendering from Compressed Textures. *Computer Graphics, Proc. SIGGRAPH,* August 1996, 373-378
- **DELP ; MITCHELL.** Image Compression Using Block Truncation Coding. *IEEE Trans. Commun.,* September 1979, vol. COM-27
- **CAMBELL et al.** Two bit/pixel full color encoding. *SIGGRAPH '86 Conference Proceedings, Computer Graphics,* August 1986, vol. 20 (4), 215-223
- **KNITTEL et al.** Hardware for Superior Texture Performance. *Proceedings of the 10th Eurographics Workshop on Graphics Hardware,* 1995, 33-39
- **IVANOV ; KUZMIN.** Color Distribution - A New Approach to Texture Compression. *Eurographics,* 2000
- **STOLLNITZ ; DEROSE ; SALESIN.** *Wavelets for Computer Graphics. Theory and Applications,* ISBN 1-55860-375-1
- **PRESS et al.** Numerical Recipes in C. Cambridge University Press
- **WU ; XIAOLIN WU.** Color Quantization by Dynamic Programming and Principal Analysis. *ACM Transactions on Graphics,* October 1992, vol. 11 (4), 348-372